# EUROPÄISCHE PATENTSCHRIFT

(11) **EP 3 824 201 B1**
(45) Veröffentlichungstag und Bekanntmachung des Hinweises auf die Patenterteilung: **18.09.2024**
(21) Anmeldenummer: 19735545.6
(22) Anmeldetag: 01.07.2019
(51) Int. Cl.: F16D 55/2255, F16D 65/18, F16D 65/52, F16D 121/08, F16D 121/24, F16D 123/00, F16D 125/28, F16D 125/32

(54) **SCHEIBENBREMSE MIT EINEM ELEKTRISCHEN AKTUATOR**
DISC BRAKE WITH AN ELECTRIC ACTUATOR
FREIN A DISQUE AVEC UN ACTIONNEUR ELECTRIQUE

(30) Priorität: 20.07.2018 DE 102018117574
(43) Veröffentlichungstag der Anmeldung: 26.05.2021
(73) Patentinhaber: KNORR-BREMSE Systeme für Nutzfahrzeuge GmbH, 80809 München (DE)
(72) Erfinder: BLESSING, Michael, 80687 München (DE); TRIMPE, Robert, 82234 Weßling (DE); KLINGNER, Matthias, 82272 Moorenweis (DE); PAHLE, Wolfgang, 83707 Bad Wiessee (DE); KOKREHEL, Csaba, 1119 Budapest (HU); NEMETH, Huba, 1116 Budapest (HU); TIHANYI, Viktor, 1032 Budapest (HU); MLINARCSEK, Csaba, 1165 Budapest (HU); SZABO, Janos, 1042 Budapest (HU); BUCH, Andreas, 82024 Taufkirchen (DE); SIPOS, Andras, 81249 München (DE)
(86) Internationale Anmeldenummer: PCT/EP2019/067587
(87) Internationale Veröffentlichungsnummer: WO 2020/015992

(56) Entgegenhaltungen:
- EP-A1- 1 236 922
- EP-A2- 0 949 433
- EP-B1- 1 236 922
- WO-A1-2013/143988
- DE-A1- 102013 100 786
- DE-B3- 102006 036 278

## Beschreibung

Die Erfindung betrifft eine Scheibenbremse mit einem elektrischen Aktuator. Im Personenkraftwagen- und im Nutzfahrzeugbereich gehören heutzutage Scheibenbremsen zum Standard. Bei der typischen Bauform einer Scheibenbremse besteht diese aus einem Bremssattel, der häufig als ein Schiebesattel (Schwimmsattel) ausgeführt ist, samt innerer Mechanik, aus in der Regel zwei Bremsbelägen und der Bremsscheibe.

Eine Bremsbetätigung erfolgt durch einen Nutzer/Fahrer oder ein Assistenzsystem, wobei eine innere Mechanik eine Zuspannkraft eines Antriebs, z.B. eines Pneumatikzylinders, über Gewindestempel auf Bremsbeläge und Bremsscheibe überträgt. Die innere Mechanik wird auch als Zuspannvorrichtung bezeichnet und weist z.B. einen Bremsdrehhebel auf, welcher mit einer Brücke, in der die Gewindestempel eingeschraubt sind, in Zusammenwirkung steht. Beim Zuspannen werden die Gewindestempel gegen einen zuspannseitigen (inneren) Bremsbelag und somit gegen die Bremsscheibe gedrückt. Im weiteren Verlauf des Bremsvorgangs wird nun der Bremssattel, bezogen auf die Bremsscheibe, entgegen der Zuspannrichtung des zuspannseitigen Bremsbelags unter Mitnahme und Anpressen des gegenüberliegenden, rückenseitigen (äußeren) Bremsbelags an die andere Seite der Bremsscheibe verschoben. Die Schiebebewegung des Bremssattels wird durch Bremssattellager, die auch als Schiebelager bezeichnet werden, ermöglicht.

Im Zuge der Elektrifizierung des Antriebes in Nutzfahrzeugen wird je nach Fahrzeuganwendung die Verwendung von pneumatischen Systemen eine untergeordnete Rolle spielen. Um der Elektrifizierung gerecht zu werden, wird auch im Bremsenbereich nach Lösungen für eine elektrisch betätigte Bremse gesucht.

Eine beispielhafte Lösung wird in dem DE 10 2006 029 942 A1 beschrieben. Es betrifft eine Scheibenbremse mit einem als Elektromotor ausgelegten elektromechanischen Aktuator zur Betätigung einer Zuspannvorrichtung zum Zuspannen der Bremse, die eine Selbstverstärkungseinrichtung aufweist. Der Elektromotor wirkt direkt oder über ein Getriebe auf einen Drehhebel ein, der auf wenigstens einen Bremskolben einwirkt, der einen Bremsbelag parallel zur Bremsscheibendrehachse verschiebt, welcher sowohl in Richtung parallel zur Bremsscheibendrehachse als auch parallel zur Bremsscheibenreibfläche beweglich ist.

Das betätigte Ende des Drehhebels der Bremsenmechanik bewegt sich auf einer Kreisbahn, wodurch der Stößel eines pneumatischen Betätigungszylinders eine radiale Ausgleichsbewegung mitmacht. Im Gegensatz hierzu kann sich die Spindel eines elektrischen Aktuators nur in axialer Richtung bewegen, was als nachteilig angesehen wird.

Das Dokument EP 1 236 922 A1 betrifft eine elektromechanische Fahrzeugbremse mit einem Elektromotor, der ein Betätigungselement translatorisch antreibt, welches einen Zuspannhebel beaufschlagt, der ein auf eine Bremsscheibe wirkendes Bremsglied betätigt. Zwischen dem Betätigungselement und dem Zuspannhebel ist ein Übertragungshebel vorgesehen, der in einer Richtung vertikal zur translatorischen Stellrichtung des Betätigungselementes an einem Gehäuse der Fahrzeugbremse abgestützt ist.

In dem Dokument DE 10 2006 036 278 B3 wird eine elektromechanisch betätigbare Scheibenbremse in selbstverstärkender Bauart beschrieben. Ein bei Bremsungen stationäres Bauteil (Druckstempel) der Selbstverstärkungseinrichtung, welches mit einer Nachstellvorrichtung verbunden oder Teil derselben ist, ist derart mit geringem Spiel parallel zur Bremsscheibendrehachse zwischen Führungsflächen des achsfesten Bauteils der Bremse aufgenommen, dass bei Bremsungen die auftretenden Umfangskräfte unmittelbar von dem stationären Bauteil der Selbstverstärkungseinrichtung auf das achsfeste Bauteil der Bremse abgestützt werden.

EP 0 949 433 A2 gibt eine Bremszuspannvorrichtung aus dem allgemeinen Stand der Technik an.

WO 2013/143988 A1 betrifft eine Zuspannvorrichtung einer Scheibenbremse aus dem Stand der Technik.

DE 10 2013 100 786 A1 beschreibt eine Scheibenbremse mit einer Lüftspielüberwachungsvorrichtung und Verfahren zur Lüftspielüberwachung des allgemeinen Stands der Technik.

Daher besteht die Aufgabe der vorliegenden Erfindung darin, eine verbesserte Scheibenbremse mit einem elektrischen Aktuator zu schaffen.

Eine weitere Aufgabe, ein Verfahren zum Einstellen eines definierten Lüftspiels einer solchen Scheibenbremse bereitzustellen, ist kein Bestandteil der vorliegenden Erfindung.

Die Aufgabe wird durch eine Scheibenbremse mit den Merkmalen des Anspruchs 1 gelöst. Weitere Lösungen sind auch durch eine Scheibenbremse mit den Merkmalen des Anspruchs 12 und durch eine Scheibenbremse mit den Merkmalen des Anspruchs 21 geschaffen.

Die weitere Aufgabe wird durch ein Verfahren gelöst, das kein Bestandteil der vorliegenden Erfindung ist.

Ein Gedanke der Erfindung besteht darin, eine Scheibenbremse mit konventioneller Zuspannmechanik und Nachstelleinrichtung als Verschleißnachsteller zu verwenden. Bevorzugt ist dabei eine Scheibenbremse ohne Selbstverstärkung. Lediglich der pneumatische Betätigungszylinder wird durch einen elektrischen Aktuator ersetzt. Um den Axialhub des Aktuators zu realisieren, kann beispielsweise ein Kugelgewindetrieb mit umliegendem Elektromotor verwendet werden. Dies ergibt eine einfache Lösung mit relativ geringem Entwicklungsaufwand.

Ein weiterer Gedanke der Erfindung besteht darin, detailliert eine Schnittstelle zwischen Bremsdrehhebel und Spindel, z.B. Kugelgewindetrieb, bzw. zwischen Bremssattel und Aktuator anzugeben.

Eine erfindungsgemäße Scheibenbremse mit einem elektrischen Aktuator, insbesondere für ein Kraftfahrzeug, mit einem eine Bremsscheibe übergreifenden Bremssattel, in welchem eine Zuspannvorrichtung mit einem Bremsdrehhebel mit einer Hebelachse angeordnet ist, wobei der elektrische Aktuator mit einer Spindel auf den Bremsdrehhebel einwirkt. Die Spindel wirkt über eine Schnittstelle auf den Bremsdrehhebel ein, wobei die Schnittstelle zwischen der Spindel des elektrischen Aktuators und dem Bremsdrehhebel angeordnet ist und einen Stößel aufweist, welcher direkt mit der Spindel des elektrischen Aktuators verbunden ist und mit dem Bremsdrehhebel verbunden ist.

Mithilfe des Stößels ist es vorteilhaft möglich, eine radial ausgleichende Mechanik zur Anpassung an die Kreisbewegung des Drehhebels zu schaffen. Der Stößel ist dabei zwischen der Spindel und dem Bremsdrehhebel angeordnet. Unter dem Begriff "zwischen" ist zu verstehen, dass Spindel, Stößel und Bremsdrehhebel bzw. das Hebelende des Bremsdrehhebels in Reihe angeordnet sind.

Eine weitere erfindungsgemäße Scheibenbremse mit einem elektrischen Aktuator, insbesondere für ein Kraftfahrzeug, mit einem eine Bremsscheibe übergreifenden Bremssattel, in welchem eine Zuspannvorrichtung mit einem Bremsdrehhebel mit einer Hebelachse angeordnet ist, wobei der elektrische Aktuator mit einer Spindel direkt oder über ein Getriebe auf den Bremsdrehhebel einwirkt, wird bereitgestellt. Der elektrische Aktuator ist über ein Drehgelenk an einer Halterung, die an dem Bremssattel befestigt ist oder ein Teil des Bremssattels ist, verschwenkbar angebracht.

Es ist keine Radialkraft vorhanden, die abgestützt werden muss, dadurch ergibt sich vorteilhaft eine kurze Bauform mit einem einfachen Aufbau.

Für eine Abdichtung kann zwischen dem elektrischen Aktuator und dem Bremssattel ein flexibles Dichtelement angebracht sein, vorzugsweise ein Faltenbalg.

Ein nicht zu der vorliegenden Erfindung gehörendes Verfahren zum Einstellen eines definierten Lüftspiels einer Scheibenbremse mit einem elektrischen Aktuator, insbesondere für ein Kraftfahrzeug, mit einem eine Bremsscheibe übergreifenden Bremssattel, in welchem eine Zuspannvorrichtung mit einem Bremsdrehhebel mit einer Hebelachse und eine Nachstelleinrichtung angeordnet sind, wobei der elektrische Aktuator mit einer Spindel auf den Bremsdrehhebel einwirkt, ist bereitgestellt. Zunächst wird eine Schaltgabel der Nachstelleinrichtung aus ihrer aktuellen Position in ihre ursprüngliche Position gedreht, indem der elektrische Aktuator eine Spindel und damit einen mit dieser verbundenen Stößel und ein Führungselement in einer Bewegungsrichtung Lösen der Bremse verstellt, wobei mindestens ein Federelement durch ein Führungselement gespannt wird, bis eine Stirnfläche des Führungselementes einen Anschlag an einer Gegenfläche am Aktuatorgehäuse des Aktuators erreicht hat, wobei diese ursprüngliche Position erfasst wird, dann der elektrische Aktuator stromlos geschaltet wird, wodurch sich das mindestens eine Federelement entspannt und das Führungselement mit dem Stößel und der Spindel in einer Bewegungsrichtung Zuspannen der Bremse gegen einen Anschlag, welcher einer Startposition des Bremsdrehhebels entspricht, drückt, und dieser Anschlag erfasst wird.

Auf diese Weise ist eine vorteilhafte Vereinbarkeit von Zugfunktion, d.h. der elektrische Aktuator übt auf den Bremsdrehhebel nicht nur eine Druckkraft, sondern auch eine Zugkraft aus, und einer korrekten Nachstellung von Verschleiß der Reibpartner Bremsbeläge und Bremsscheibe möglich.

Ein weiterer Vorteil ist dabei, dass per Softwaresteuerung die Einfederstärke des mindestens einen Federelementes unterschiedlich groß definiert werden, wodurch sich ein unterschiedlich großes aber definiertes Solllüftspiel einstellen lässt.

Der Einsatz von Federelementen würde bei fester Hebelkopplung je nach Einfederstärke zu einer undefinierten Startposition des Hebels führen, was wiederum zu unterschiedlichem Lüftspiel führt. Dies ist durch das erfindungsgemäße Verfahren in vorteilhafter Weise verhindert.

In einer Ausführung des nicht erfindungsgemäßen Verfahrens ist die Scheibenbremse wie die oben beschriebene ausgebildet

Zudem kann dabei die Spindel des elektrischen Aktuators als eine Kugelgewindespindel ausgebildet sein, da dies einen vorteilhaften geringen Bauraum ermöglicht.

In einer Ausführung der erfindungsgemäßen Scheibenbremse ist es vorgesehen, dass der Stößel mit einem Hebelende des Bremsdrehhebels über ein an dem Hebelende drehbar befestigtes Lager verbunden ist. Dadurch kann bei dem bogenförmigen Weg des Hebelendes des Bremsdrehhebels die radiale Kraft auf die Spindel des Kugelgewindetriebes minimiert werden und vorteilhaft eine Lebensdauer verlängert werden. Dies ist besonders vorteilhaft durch ein Wälzlager oder Gleitlager am Hebelkopf. Vorteil der Einsparung eines zusätzlichen Führungselements für die Kugelumlaufspindel, wodurch sich eine kurze Bauform des Aktuators ergibt.

In weiterer Ausbildung weist der Stößel einen Grundkörper mit einer Kontaktkontur auf, wobei die Kontaktkontur mit dem an dem Hebelende des Bremsdrehhebels drehbar befestigten Lager in Kontakt steht und eine Abrollfläche für das Lager bildet. Damit kann Reibung vermindert werden. Zudem wird eine Anpassung an den bogenförmigen Weg des Hebelendes verbessert.

Wenn der Stößel mit einer Klammer verbunden ist, welche mindestens einen Seitenabschnitt mit einem Langloch aufweist, wobei sich ein Lagerachselement des Lagers durch das Langloch erstreckt, kann vorteilhaft einfach eine Zugfunktion zwischen Bremsdrehhebel und Spindel ermöglicht werden. Damit ergibt sich auch eine schnellere Steuerung der Scheibenbremse.

Hierzu kann die Klammer in einer U-Form ausgebildet sein und einen Verbindungsabschnitt und zwei Seitenabschnitte mit jeweils einem Langloch umfassen wobei die Klammer mit ihren Seitenabschnitten an dem Stößel befestigt ist, und wobei sich das Lagerachselement des Lagers durch die Langlöcher erstreckt. Mit der Klammer ergibt sich der Vorteil, dass ein Abheben des Stößels verhindert werden kann, um dauerhaft ein Spindelmoment im Bremsdrehhebel abstützen zu können.

Es ist in weiterer Ausgestaltung vorteilhaft, wenn das Hebelende des Bremsdrehhebels gabelförmig mit zwei Gabelenden ausgebildet ist, da so einfacher Aufbau und schnelle Montage ermöglicht sind.

In einer noch weiteren Ausführung ist zwischen jedem Seitenabschnitt der Klammer und jeweils einem Gabelende eine Gleitscheibe angeordnet. Dies ist vorteilhaft, da so eine Minimierung des Reibmomentes beim Abstützen des Spindelmomentes im Drehhebel durch die Gleitscheiben ermöglicht wird und eine höhere Lebensdauer der Spindel erreicht werden kann.

Erfindungsgemäß ist vorgesehen, dass der Stößel einen Aufnahmeabschnitt mit einer Aufnahme aufweist, wobei ein Spindelende der Spindel in der Aufnahme aufgenommen ist. Dies ergibt einen kompakten Aufbau.

Erfindungsgemäß ist das Spindelende der Spindel in der Aufnahme des Aufnahmeabschnitts des Stößels mit einem Bolzenelement fixiert. Anstelle des Bolzenelementes ist auch eine Schraube oder ein Spannstift möglich. Das Bolzenelement weist einige Vorteile auf. Es dient als Sicherung, wenn die Spindel am Drehhebel eine Zugkraft aufbringt. Gleichzeitig überträgt das Bolzenelement ein Moment der Spindel bei Betätigung.

Es ist erfindungsgemäß vorgesehen, dass eine Ringfläche der Spindel mit einer Stirnfläche des Aufnahmeabschnitts des Stößels in Kontakt steht und eine Druckkraft auf den Stößel überträgt. Damit wird eine gleichmäßige Kraftverteilung vorteilhaft ermöglicht.

In erfindungsgemäßer Ausführung steht der Stößel mit einem federnden Anschlag mit mindestens einem Federelement über ein Führungselement in Zusammenwirkung. Es ist vorteilhaft, dass der Stößel über das Führungselement mit dem federnden Anschlag in Zusammenwirkung steht, da das Führungselement individuell an die Umgebungsbedingungen angepasst werden kann, ohne eine Veränderung des Stö-ßels erforderlich zu machen. Auf diese Weise wird der Vorteil eines federnden Anschlags gebildet, damit bei einer eventuellen Fehlfunktion oder Stromausfall des Aktuators nicht hochdynamisch gegen einen festen Anschlag gefahren wird und hierdurch Schäden entstehen können oder ein anschließendes Festsitzen auftreten kann.

Die erfindungsgemäße Ausführung sieht vor, dass das Führungselement einen ersten Hohlzylinderabschnitt mit einer Bodenwand und einen zweiten Hohlzylinderabschnitt mit einer Bodenwand umfasst, wobei sich der Aufnahmeabschnitt des Stößels durch eine Durchgangsöffnung der Bodenwand des ersten Hohlzylinderabschnitts des Führungselementes erstreckt und wobei eine Stirnfläche der Bodenwand an einer Schulter des Stößels anliegt. So wird der Vorteil eines platzsparenden Aufbaus ermöglicht.

Eine vorteilhaft kompakte Führung wird dadurch erreicht, dass das Führungselement mit dem zweiten Hohlzylinderabschnitt in einer umlaufenden Wand eines an dem Bremssattel befestigten ortsfesten Aktuatorgehäuses verschiebbar in Richtung einer Spindelachse der Spindel des Aktuators geführt ist.

Dabei ist ein Verschiebeweg des in der umlaufenden Wand des Aktuatorgehäuses verschiebbar geführten Führungselementes einerseits durch einen Sicherungsring in der umlaufenden Wand und andererseits durch den federnden Anschlag mit dem mindestens einen Federelement festgelegt. Dies ergibt einen kompakten Aufbau.

Zudem ist es vorteilhaft kompakt im Aufbau, wenn der erste Hohlzylinderabschnitt des Führungselementes von dem mindestens einen Federelement umgeben ist, welches sich axial einerseits an dem Boden des zweiten Hohlzylinderabschnitts des Führungselementes und andererseits an einem Stützring an dem ortsfesten Aktuatorgehäuse abstützt, und wobei sich das mindestens eine Federelement radial an dem ortsfesten Aktuatorgehäuse abstützt und von diesem geführt ist.

In weiterer Ausgestaltung liegt der zweite Hohlzylinderabschnitts durch die Federkraft des vorgespannten mindestens einen Federelementes an dem Sicherungsring in der umlaufenden Wand des ortsfesten Aktuatorgehäuses an. Auf diese Weise übernimmt das Führungselement vorteilhaft einige Funktionen, die nicht in den Stößel integriert werden müssen, damit dieser in möglichst vielen Anwendungen bei unterschiedlichen Randbedingungen eingesetzt werden kann.

Eine alternative erfindungsgemäße Scheibenbremse mit einem elektrischen Aktuator, insbesondere für ein Kraftfahrzeug, mit einem eine Bremsscheibe übergreifenden Bremssattel, in welchem eine Zuspannvorrichtung mit einem Bremsdrehhebel mit einer Hebelachse angeordnet ist, wobei der elektrische Aktuator mit einer Spindel auf den Bremsdrehhebel einwirkt,
wobei die Spindel über eine Schnittstelle auf den Bremsdrehhebel einwirkt, wobei die Schnittstelle zwischen der Spindel des elektrischen Aktuators und dem Bremsdrehhebel angeordnet ist und einen Stößel aufweist, welcher direkt mit der Spindel des elektrischen Aktuators verbunden ist und mit dem Bremsdrehhebel verbunden ist, wobei der Stößel einen Aufnahmeabschnitt mit einer Aufnahme) aufweist,
wobei ein Spindelende der Spindel in der Aufnahme aufgenommen ist,
wobei das Spindelende der Spindel in der Aufnahme des Aufnahmeabschnitts des Stößels mit einem Bolzenelement fixiert ist,
wobei eine Ringfläche der Spindel mit einer Stirnfläche des Aufnahmeabschnitts des Stößels in Kontakt steht und eine Druckkraft auf den Stößel überträgt,
wobei der Stößel mit einem federnden Anschlag mit mindestens einem Federelement über ein Führungselement in Zusammenwirkung steht, ist geschaffen

In dieser Ausführung der alternativen erfindungsgemäßen Scheibenbremse weist das Führungselement einen Körper mit einer zentralen Durchgangsöffnung und einen hohlzylindrischen Abschnitt mit einer umlaufenden Wand auf, und wobei an der umlaufenden Wand an ihrem Rand ein radial nach außen hervorstehender Kragen angeformt ist. Dies macht einen kompakten Auf bau möglich.

Für einen geringen Einbauraum ist es in einer Ausführung der alternativen erfindungsgemäßen Scheibenbremse zudem vorteilhaft, wenn sich der Stößel durch die Durchgangsöffnung des Körpers des Führungselementes erstreckt, wobei eine Seite des Körpers des Führungselementes mit der Schulter des Stößels in Kontakt steht.

In einer weiteren Ausführung der alternativen erfindungsgemäßen Scheibenbremse kann zwischen dem Führungselement und dem Stößel ein Zwischenelement angeordnet sein, wobei das Zwischenelement einen hohlzylindrischen Abschnitt mit einer umlaufenden Wand mit einem sich radial nach außen erstreckenden Kragen und mit einem Boden mit einer zentralen Öffnung aufweist. Damit ergibt sich eine vorteilhaft einfache Anpassung zwischen Stößel und Führungselement.

In weiterer Ausgestaltung der alternativen erfindungsgemäßen Scheibenbremse ist das Zwischenelement mit seinem Boden an einem Außendurchmesser der Ringfläche der Spindel angeordnet ist, wobei eine Außenfläche der umlaufenden Wand mit der Innenseite der Durchgangsöffnung des Körpers des Führungselementes in Kontakt steht, und wobei der sich radial nach außen erstreckende Kragen des Zwischenelementes zwischen dem Körper des Führungselementes und der Schulter des Stößels angeordnet ist. Damit wird ein kompakter Aufbau ermöglicht.

Eine noch weitere Ausführung der alternativen erfindungsgemäßen Scheibenbremse sieht vor, dass das Führungselement mit einem Kontakt zwischen dem Kragen der umlaufenden Wand des Führungselementes mit einer Innenfläche der Wand des Aktuatorgehäuses und mit einem Kontakt zwischen einem Kragen der Wand des Aktuatorgehäuses und der Außenfläche der umlaufenden Wand des Führungselementes verschiebbar in Richtung einer Spindelachse der Spindel des Aktuators geführt ist. Dies ermöglicht einen vorteilhaft einfachen Aufbau mit einfacher Montage.

Es ist dabei in der alternativen erfindungsgemäßen Scheibenbremse vorteilhaft, wenn ein Verschiebeweg des in der umlaufenden Wand des Aktuatorgehäuses verschiebbar geführten Führungselementes einerseits durch den Kragen der umlaufenden Wand des Führungselementes in Verbindung mit einem Sicherungsring und andererseits durch den Kragen der Wand des Aktuatorgehäuses festgelegt ist. Dies ist vorteilhaft, da so zusätzliche Bauteile zur Realisierung von Anschlägen eingespart werden können.

In weiterer Ausgestaltung der alternativen erfindungsgemäßen Scheibenbremse stützt sich das mindestens eine Federelement einerseits axial an der Stirnfläche des Körpers des Führungselementes und andererseits an einem Stützring am ortsfesten Aktuatorgehäuse an dem ortsfesten Aktuatorgehäuse ab, und das mindestens eine Federelement stützt sich radial an dem ortsfesten Aktuatorgehäuse ab und ist von diesem geführt. So wird ein einfacher Aufbau ermöglicht.

Dabei ist es in der alternativen erfindungsgemäßen Scheibenbremse vorteilhaft, wenn das Führungselement durch die Federkraft des vorgespannten mindestens einen Federelementes mit dem Sicherungsring an dem Kragen der umlaufenden Wand des ortsfesten Aktuatorgehäuses anliegt. So wird ein Spiel des Verschiebewegs des Führungselementes verringert.

In einer anderen Ausführung, die nicht zu der vorliegenden Erfindung gehört, ist das Spindelende der Spindel in der Aufnahme des Aufnahmeabschnitts des Stößels verschiebbar angeordnet, und die Aufnahme und das Spindelende stehen untereinander über Längsverzahnungen in Eingriff. Damit wird auf engem Bauraum eine drehfeste und verschiebbare Paarung ermöglicht.

Wenn zwischen dem Stößel und dem Führungselement eine Freiwegkupplung angeordnet ist, kann bei dieser Ausführung, die nicht zu der vorliegenden Erfindung gehört, die Zugfunktion für einen definierten Verschiebeweg unterbrochen werden. Nach Überwindung dieser Strecke ist die Spindel über Zwischenbauteile wieder axial mit dem Hebel gekoppelt.

Ein vorteilhafter Aufbau, der nicht zu der vorliegenden Erfindung gehört, wird dadurch ermöglicht, dass die Freiwegkupplung einen hohlzylindrischen Körper mit einer Gewinde, einen weiteren hohlzylindrischen Körper mit einer Bohrung, einer umlaufenden Wand und einem Kragen umfasst, wobei in der umlaufenden Wand in deren Innenseite eine umlaufende Ausnehmung eingeformt ist, welche in axialer Richtung durch Ränder begrenzt ist.

Zudem ist es in einer Ausführung, die nicht zu der vorliegenden Erfindung gehört, vorteilhaft, wenn der hohlzylindrische Körper der Freiwegkupplung zwischen der Ringfläche der Spindel und der Stirnfläche des Stößels angeordnet und mit der Spindel axial und drehfest verbunden ist, da sich ein kompakter Aufbau ergibt.

In weiterer Ausgestaltung, die nicht zu der vorliegenden Erfindung gehört, stehen das in der Aufnahme des Stößels aufgenommene Spindelende und die Aufnahme untereinander über Längsverzahnungen in Eingriff stehen, wobei die Spindel und der Stößel in Axialrichtung der Spindelachse relativ zueinander verschiebbar sind. Der Vorteil ist eine einfache Montage bei gleichzeitig engem Bauraum.

Ein geringer Bauraum und einfache Montage ergeben sich als Vorteile in einer nicht zu der vorliegenden Erfindung gehörenden Ausführung, in welcher der Aufnahmeabschnitt des Stößels in der Bohrung der Freiwegkupplung eingesetzt ist, wobei in einem Endbereich des Aufnahmeabschnitts eine umlaufende Nut eingeformt ist, in welcher ein Sicherungsring gehalten ist, und wobei der Sicherungsring in der Ausnehmung der umlaufenden Wand der Freiwegkupplung in Richtung der Spindelachse verschiebbar geführt ist

Es ist außerdem in einer Ausführung, die nicht zu der vorliegenden Erfindung gehört, vorteilhaft, dass eine axiale Länge der Ausnehmung mit ihren Rändern als jeweiliger Anschlag für den Sicherungsring einen Verschiebeweg festlegt, da zusätzliche Anschlagbauteile nicht erforderlich sind.

Eine alternative Ausführung einer Ausführung, die nicht zu der vorliegenden Erfindung gehört, sieht vor, dass der Stößel mit der Spindel des elektrischen Aktuators mit einem Stößelende über ein Drehgelenk verbunden ist, wobei das andere Stößelende des Stößels in eine Vertiefung des Hebelendes des Bremsdrehhebels eingreift. Bei diesem vorteilhaft einfachen Aufbau kanndas Drehmoment der Spindel im Hebelende des Bremsdrehhebels durch ein zylindrisch ausgeformtes Stößelende abgestützt werden.

In einer weiteren Alternative einer Ausführung, die nicht zu der vorliegenden Erfindung gehört, ist der Stößel mit der Spindel des elektrischen Aktuators mit einem Stößelende über ein erstes Drehgelenk verbunden, wobei das andere Stößelende des Stößels über ein zweites Drehgelenk an dem Hebelende des Bremsdrehhebels verschwenkbar angelenkt ist. Hierbei ergibt sich der Vorteil, dass eine Zugkraft auf den Bremsdrehhebel bei gleichzeitig einfachem Aufbau übertragen werden kann.

Wenn die Spindel des elektrischen Aktuators in einer Ausführung, die nicht zu der vorliegenden Erfindung gehört, durch ein Führungselement abgestützt ist, kann das Stößelende vorteilhaft kugelförmig sein.

In einer erfindungsgemäßen Ausführung ist die Spindel des elektrischen Aktuators als eine Kugelgewindespindel ausgebildet. Damit können vorteilhaft marktübliche Aktuatoren zum Einsatz kommen.

Die Erfindung ermöglicht folgende Vorteile:
- Realisierung einer Zugfunktion am Bremsdrehhebel (durch die Klammer), um die Bremse schneller steuern zu können
- Verhindern von Abheben des Stößels (durch die Klammer), um dauerhaft das Spindelmoment im Bremsdrehhebel abstützen zu können
- Minimierung der radialen Kraft auf die Spindel des Kugelgewindetriebes (→ höhere Lebensdauer) durch:
   ∘ Wälzlager oder Gleitlager am Hebelkopf (Einsparung eines zusätzlichen Führungselements für die Kugelumlaufspindel; kurze Bauform)
   ∘ Führungselement bei schwenkbarem Spindelende (erfordert leider langen Bauraum)
   ∘ schwenkbarer Aktuator (keine Radialkraft vorhanden, außer durch Vibrationen oder Anschlüsse am Aktuator; kurze Bauform)
- Minimierung des Reibmomentes beim Abstützen des Spindelmomentes im Hebel durch Gleitscheiben → höhere Lebensdauer der Spindel
- Vereinbarkeit von Zugfunktion und korrekter Nachstellung
- Per Softwaresteuerung kann die Einfederstärke unterschiedlich groß definiert werden, wodurch sich ein unterschiedlich großes aber definiertes Solllüftspiel einstellt

Die Erfindung wird nun anhand beispielhafter Ausführungen mit Bezug auf die beigefügten Zeichnungen näher erläutert. Hierbei zeigen:
- Fig. 1 - 2: schematische Schnittansichten einer Scheibenbremse nach dem Stand der Technik;
- Fig. 3: eine schematische Schnittansicht eines ersten Ausführungsbeispiels einer erfindungsgemäßen Schnittstelle zwischen Aktuator und Bremsdrehhebel;
- Fig. 4: eine schematische, vergrößerte Perspektivansicht der erfindungsgemäßen Schnittstelle nach Fig. 3;
- Fig. 5: eine schematische Perspektivansicht einer Klammer;
- Fig. 6: eine schematische Schnittansicht eines zweiten Ausführungsbeispiels einer Schnittstelle zwischen Aktuator und Bremsdrehhebel, welches nicht zu der beanspruchten Erfindung gehört;
- Fig. 7: eine schematische Schnittansicht einer Variante des zweiten Ausführungsbeispiels nach Fig. 6;
- Fig. 8 - 9: schematische Ansichten eines dritten Ausführungsbeispiels der erfindungsgemäßen Schnittstelle;
- Fig. 10: eine schematische Schnittansicht eines vierten Ausführungsbeispiels einer Schnittstelle zwischen Aktuator und Bremsdrehhebel, welches nicht zu der beanspruchten Erfindung gehört;
- Fig. 11 - 12: schematische Schnittansichten von Varianten des ersten Ausführungsbeispiels der erfindungsgemäßen Schnittstelle nach Fig. 3;
- Fig. 13: die schematische Schnittansicht nach Fig. 3 mit Darstellung von Bewegungsabläufen; und
- Fig. 14 - 15: schematische Darstellungen eines Antriebs einer Nachstelleinrichtung.

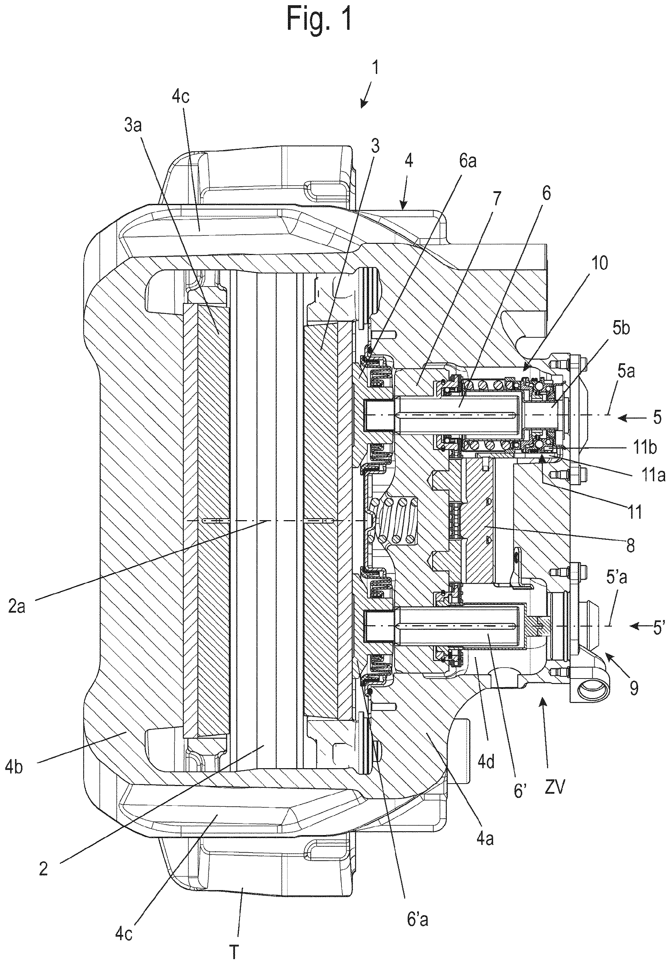

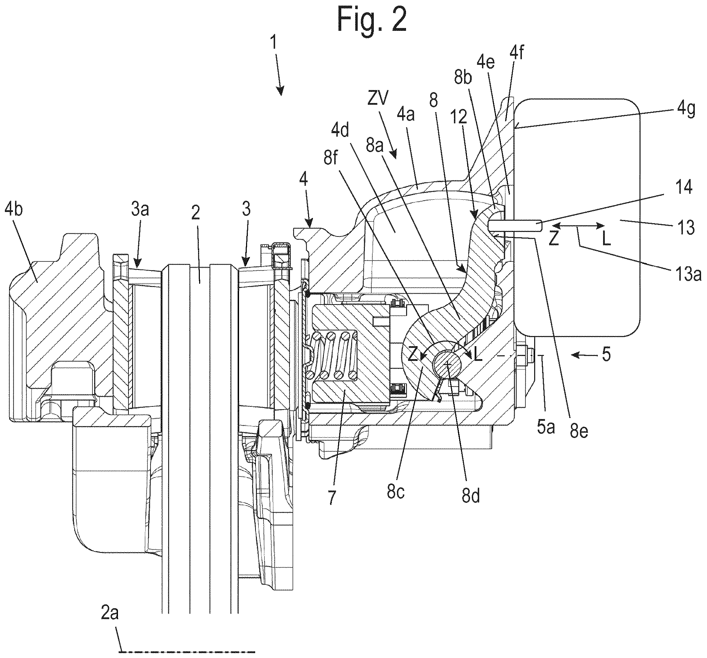

**Fig. 1** zeigt eine schematische Schnittansicht einer Scheibenbremse 1 nach dem Stand der Technik. **Fig. 2** stellt eine Schnittansicht der Scheibenbremse 1 nach Fig. 1 in einer Ebene einer Bremsscheibenachse 2a senkrecht zu der Schnittebene der Fig.1 dar.

Die Scheibenbremse 1 aus dem Stand der Technik wird im Folgenden zur Übersicht nur kurz beschrieben. Aufbau und Funktion sind in dem Dokument DE 10 2012 108 672 B3 ausführlich erläutert.

Die Scheibenbremse 1 ist hier eine zweistempelige Bremse mit zwei Spindeleinheiten 5 und 5', die jeweils einen Gewindestempel 6, 6' aufweisen, und umfasst eine Bremsscheibe 2 mit der Bremsscheibenachse 2a, einen Bremsträger T, Bremsbeläge 3, 3a, einen Bremssattel 4, eine Zuspannvorrichtung ZV, eine Mitnehmereinrichtung 9 mit einer Mitnehmerachse 5'a, eine Nachstelleinrichtung 10 mit einer Nachstellerachse 5a und einem Trägerkörper 5b (auch als Nachstellerwelle bezeichnet), und eine nicht näher bezeichnete Synchroneinrichtung. Die Nachstellerachse 5a, die Mitnehmerachse 5'a und die Bremsscheibenachse 2a verlaufen parallel zueinander.

Die Zuspannvorrichtung ZV ist hier mit einem Bremsdrehhebel 8, der um eine Hebelachse 8d verschwenkbar ist, versehen und umfasst eine Brücke 7, in welche die zwei Gewindestempel 6, 6' eingeschraubt sind. An den zur Bremsscheibe 2 weisenden Enden sind die Gewindestempel 6, 6' jeweils mit einem Druckstück 6a, 6'a versehen.

Die Bremsscheibe 2 ist von dem hier als Schwimmsattel ausgeführten Bremssattel 4 übergriffen. Der Bremssattel 4 weist einen Zuspannabschnitt 4a und einen Rückenabschnitt 4b auf, welche durch zwei Zugstreben 4c verbunden sind.

Beiderseits der Bremsscheibe 2 ist jeweils ein Bremsbelag 3, 3a angeordnet. Die Druckstücke 6a, 6'a der Gewindestempel 6, 6' stehen mit dem Bremsbelag 3 in Kontakt. Der Bremsbelag 3 wird auch zuspannseitiger Bremsbelag 3 genannt. Der andere Bremsbelag 3a, der als reaktionsseitiger Bremsbelag 3a bezeichnet wird, ist auf der anderen Seite der Bremsscheibe 2 im Rückenabschnitt 4b des Bremssattels 4 festgelegt.

Der Bremssattel 4 ist mit dem Zuspannabschnitt 4a über Schiebelager an dem ortsfesten Bremsträger 3 in Richtung der Bremsscheibenachse 2a verschiebbar geführt angebracht. Längsachsen der Schiebelager verlaufen parallel zueinander und parallel zu der Bremsscheibenachse 2a.

In dem Zuspannabschnitt 4a des Bremssattels 4 ist die Zuspannvorrichtung ZV in einem Innenraum 4d angeordnet. Der Innenraum 4d ist auf der Seite des Zuspannabschnitts 4a, welche zur Bremsscheibe 2 weist, durch eine Bodenplatte, die auch Bodenblech genannt wird, verschlossen.

Ein Abstand zwischen den Bremsbelägen 5, 5a und der Bremsscheibe 2 in der gelösten Stellung wird als Lüftspiel bezeichnet.

Die Nachstelleinrichtung 10 ist zur Verschleißnachstellung eines vorher festgelegten Lüftspiels, welches als Soll-Lüftspiel bezeichnet wird, ausgebildet. Eine detaillierte Beschreibung der Nachstelleinrichtung 10, der Mitnehmereinrichtung 9 und der Synchroneinrichtung kann z.B. dem Dokument DE 10 2012 108 672 B3 entnommen werden.

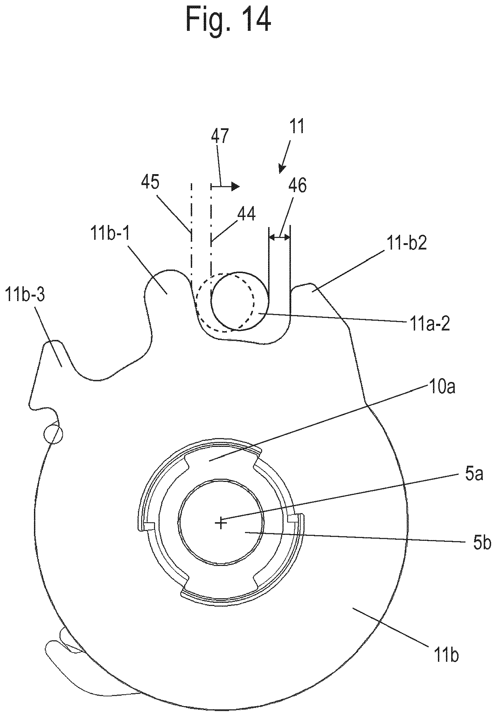

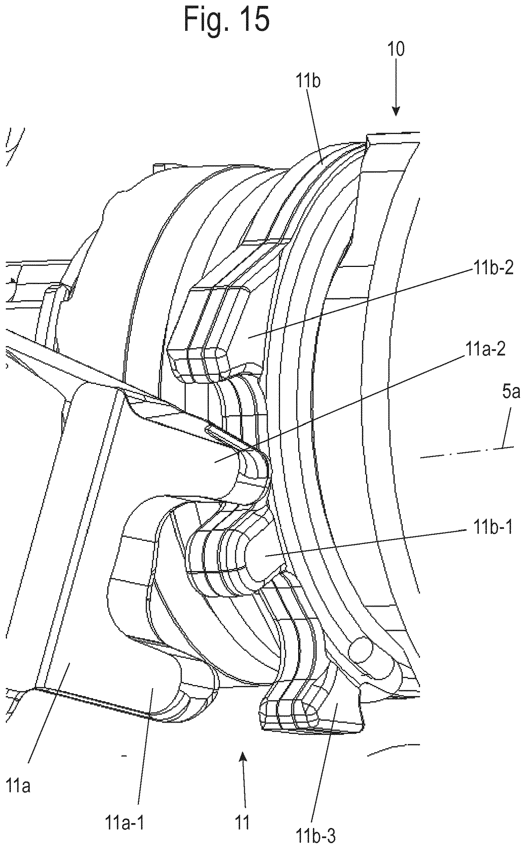

Die Nachstelleinrichtung 10 ist mit dem Bremsdrehhebel 8 über einen Nachstellerantrieb 11 gekoppelt. Dabei steht ein Antriebselement 11 des Bremsdrehhebels 8 mit einer Schaltgabel 11b einer Antriebsscheibe der Nachstelleinrichtung 10 in Eingriff. Dies wird unten weiter im Zusammenhang mit den Figuren 14 und 15 noch näher beschrieben.

Der Bremsdrehhebel 8 weist einen Hebelkörper 8a mit einem ersten Hebelende 8b und einem zweiten Hebelende 8c auf. Das erste Hebelende 8b steht mit einem Stößel 14 eines Aktuators 13, z.B. ein pneumatischer Betätigungszylinder, in Verbindung. Hier weist das erste Hebelende 8b eine Vertiefung 8e auf, mit welcher der Stößel 14 in Kontakt steht.

Der Stößel 14 erstreckt sich durch eine Öffnung einer Wand 4f des Zuspannabschnitts 4a des Bremssattels 4. Der Aktuator 13 ist an einer äußeren Fläche 4g dieser Wand in nicht näher gezeigter Weise befestigt.

Das zweite Hebelende 8c ist so ausgestaltet, dass es einerseits mit der Brücke 7 in Kontakt steht und andererseits die Hebelachse 8d aufnimmt. Die Hebelachse 8d verläuft parallel zu der Bremsscheibe 2 und rechtwinklig zu der Bremsscheibenachse 2a (Fig. 2).

Bei einem Zuspannvorgang der Scheibenbremse 1 wird ein Axialhub des Aktuators 14 in einer Bewegungsrichtung 13a (Zuspannen Z; Lösen L) auf den Stößel 13 übertragen. Der Stößel 13 steht mit dem ersten Hebelende 8b des Bremsdrehhebels 8 in Kontakt und verschwenkt den Bremsdrehhebel 8 um die Hebelachse 8d (in Fig. 2 gegen den Uhrzeigersinn). Dabei bewegt sich das betätigte erste Hebelende 8b auf einer Kreisbahn. Dies ist schematisch durch einen Bremshebelweg 8f angedeutet. Hier ist eine Bewegung gegen den Uhrzeigersinn das Zuspannen Z der Bremse, und eine Bewegung im Uhrzeigersinn das Lösen L der Bremse.

Die Brücke 7 und somit die in ihr eingeschraubten Gewindestempel 6, 6' werden dann von dem zweiten Hebelende 8c des Bremsdrehhebels 8 in Richtung der Bremsscheibenachse 2a verstellt. Eine Bewegung auf die Bremsscheibe 2 zu in Richtung der Bremsscheibenachse 2a wird als Zuspannbewegung bezeichnet, und eine Bewegung in Gegenrichtung wird Lösebewegung genannt. Mittels einer Rückstellfeder wird die Brücke 7 bei der Lösebewegung in die in Fig. 1 gezeigte gelöste Stellung der Scheibenbremse 1 zurück verstellt.

Bei der kreisförmigen Bewegung des ersten Hebelendes 8b des Bremsdrehhebels 8 macht der Stößel 14 des pneumatischen Betätigungszylinders eine in Bezug auf die Hebelachse 8d radiale Ausgleichsbewegung mit.

Wenn der Aktuator 13 mit einem elektrischen Antrieb ausgebildet ist, kann sich - im Gegensatz zu dem oben gesagten -die Spindel eines solchen elektrischen Aktuators 13 nur in axialer Richtung bewegen, daher ist eine radial ausgleichende Mechanik erforderlich. Hierzu wird im Folgenden eine erfindungsgemäße Schnittstelle 12 zwischen dem elektrischen Aktuator 13 und dem Bremsdrehhebel 8 beschrieben.

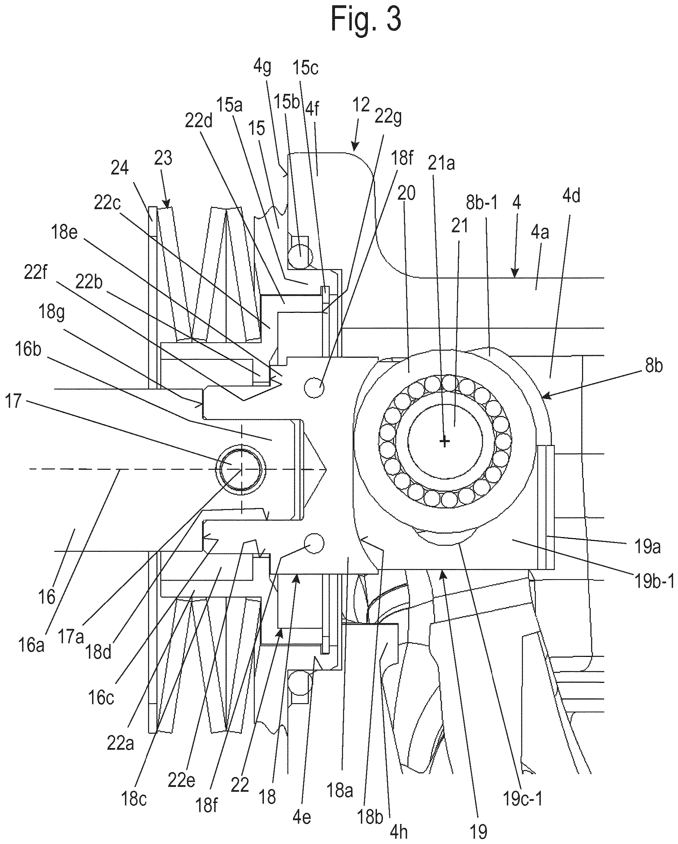

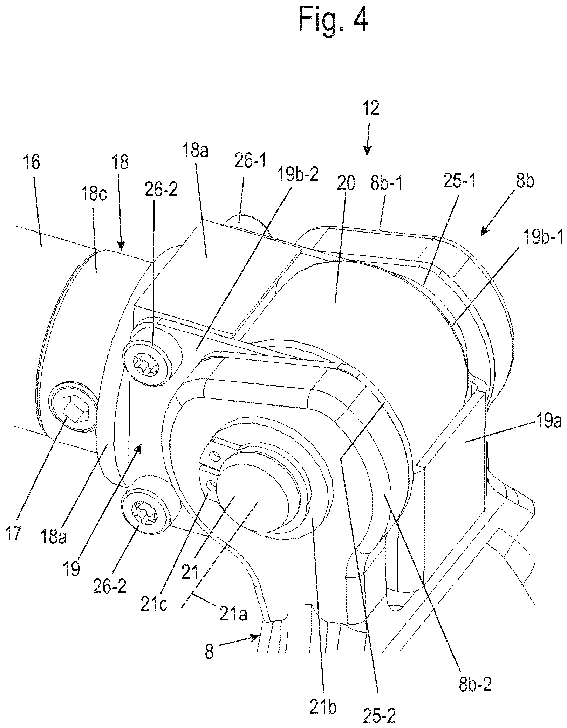

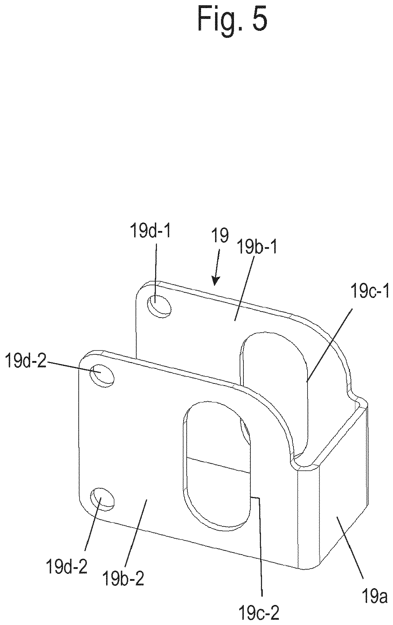

**Fig. 3** zeigt eine schematische Schnittansicht eines ersten Ausführungsbeispiels der erfindungsgemäßen Schnittstelle 12 zwischen Aktuator 13 und Bremsdrehhebel 8. In **Fig. 4** ist eine schematische, vergrößerte Perspektivansicht der Schnittstelle 12 nach Fig. 3 dargestellt. **Fig. 5** stellt eine schematische Perspektivansicht einer Klammer 19 dar.

Der Aktuator 13 ist als elektrischer Aktuator 13 ausgebildet. Um den Axialhub des Aktuators 13 zu realisieren, wird hier beispielsweise ein Kugelgewindetrieb mit umliegendem Elektromotor verwendet. Andere Ausführungen des elektrischen Aktuators 13 sind natürlich möglich.

Der Aufbau und die Funktionsweise eines elektrischen Aktuators 13 werden hier nicht angegeben. Sie können z.B. dem Dokument DE 10 2006 029 942 A1 entnommen werden.

Der elektrische Aktuator 13 weist ein Gehäuse 15 auf, mit welchem er an dem Zuspannabschnitt 4a des Bremssattels 4 an der äußeren Fläche 4g der Wand 4f befestigt, z.B. festgeschraubt, ist. Der Aktuator ist hier nicht dargestellt, aber im Zusammenhang mit Fig. 2 leicht vorstellbar. Von seinem Gehäuse 15 ist nur der Abschnitt im Bereich der Öffnung 4e gezeigt.

Eine umlaufende Wand 15a des Gehäuses 15 steht von dem Gehäuse 15 axial in Richtung auf den Zuspannabschnitt 4a hervor und ist in einer korrespondierenden Bohrung der Öffnung 4e in der Wand 4f des Zuspannabschnitts 4a eingesetzt. Eine Dichtung 15b verhindert das Eindringen von Feuchtigkeit in den Innenraum 4d des Zuspannabschnitts 4a.

Der elektrische Aktuator 13 wirkt über die Schnittstelle 12 auf den Bremsdrehhebel 8 ein. Die Schnittstelle 12 ist dabei zwischen der Spindel des elektrischen Aktuators und dem Bremsdrehhebel angeordnet.

Die Schnittstelle 12 bildet eine Verbindung der Spindel 16 des elektrischen Aktuators 13 mit dem Bremsdrehhebel 8. Unter dem Begriff "Verbindung" ist hier zu verstehen, dass die Spindel 16 mit dem Bremsdrehhebel 8 derart über die Schnittstelle 12 verbunden ist, dass von der durch den elektrischen Aktuator 13 bewegten Spindel 16 beim Zuspannen der Bremse eine Druckkraft auf den Bremsdrehhebel 8 übertragen wird, und dass von der durch den elektrischen Aktuator 13 bewegten Spindel 16 beim Lösen der Bremse eine Zugkraft oder keine Zugkraft auf den Bremsdrehhebel 8 übertragen wird.

Die Spindel 16 mit einer Spindelachse 16a ist hier mit einem Endbereich mit einem Spindelende 16b gezeigt. Das Spindelende 16b ist mit einem hier kurz ausgebildeten Stößel 18 verbunden. Der Stößel 18 steht mit dem ersten Hebelende 8b des Bremsdrehhebels 8 in Kontakt.

Das Spindelende 16b ist eine Art Zapfen und weist einen kleineren Außendurchmesser als die Spindel 16 auf. Dadurch ist an der Verbindung zwischen der Spindel 16 und dem Spindelende 16b eine umlaufende Stirnfläche 16c gebildet.

Der Stößel 18 weist einen im Wesentlichen quaderförmigen Grundkörper 18a mit einer Kontaktkontur 18b und einen hohlzylinderförmigen Aufnahmeabschnitt 18c mit einer Aufnahme 18d auf. Die Kontaktkontur 18b weist zu dem ersten Hebelende 8b des Bremsdrehhebels 8 und bildet eine Abrollfläche für ein Lager 20, das unten noch näher beschrieben wird.

Jeweils an gegenüberliegenden Seitenflächen des Grundkörpers 18a des Stößels 18 sind zwei Befestigungslöcher 18f eingeformt. Sie können Gewinde aufweisen oder als Durchgangsbohrungen ausgeführt sein. Ihre Längsachsen verlaufen parallel zu der Hebelachse 8d.

Der Aufnahmeabschnitt 18c steht zu der Spindel 16 hervor und weist eine Stirnfläche 18g auf. Die Aufnahme 18d korrespondiert mit der Form des Spindelendes 16b, welches in der Aufnahme 18d angeordnet ist. Dabei liegt die Stirnfläche 18g des Stößels 18 an der Ringfläche 16c der Spindel 16 an. Eine nicht bezeichnete Stirnfläche des Spindelendes 16b liegt jedoch nicht an dem Boden der Aufnahme 18g an. Das Spindelende 16b ist durch ein Bolzenelement 17 (z.B. auch Schraube oder Spannstift o.dgl.), der eine Bolzenelementachse 17a aufweist und sich durch die Wandung des Aufnahmeabschnitts 18c erstreckt, axial mit dem Stößel 18 verbunden.

In dem Zuspannabschnitt 4a des Bremssattels 4 ist die übliche Zuspannmechanik der Zuspannvorrichtung ZV und die Nachstelleinrichtung 10 (Fig. 1, 2) angeordnet. Der Bremsdrehhebel 8, welcher zur Übersetzung der Zuspannwege und -kräfte dient, ist am betätigten ersten Hebelende 8b gabelförmig gestaltet. Das erste Hebelende 8b weist hier zwei parallel zueinander angeordnete und voneinander beabstandete Gabelenden 8b-1 und 8b-2 auf.

Durch diese Gabelenden 8b-1, 8b-2 des Bremsdrehhebels 8 ist eine Lagerachselement 21 (z.B. ein Lagerbolzen) mit einer Lagerachse 21a gesteckt, auf der das Lager 20 (Wälzlager oder Gleitlager) angeordnet ist. Die Lagerachse 21a verläuft parallel zu der Hebelachse 8d. Das Lagerachselement 21 ist durch zwei Sicherungsringe 21c und zwei Unterlegscheiben 21b axial fixiert (Fig. 4).

Die Außenfläche des Lagers 20 steht in Kontakt mit der Kontaktkontur 18b des Stößels 18. Mittels einer Klammer 19 wird dieser Kontakt zwischen Kontaktkontur 18b und Lager 20 sichergestellt.

Die Klammer 19 ist hier einstückig in einer U-Form ausgebildet und umfasst einen Verbindungsabschnitt 19a, zwei Seitenabschnitte 19b-1 und 19b-2 mit jeweils einem Langloch 19c-1, 19-c2. Dies ist in Fig. 5 deutlich zu erkennen.

Die Seitenabschnitte 19b-1 und 19b-2 sind im Wesentlichen rechteckige Platten mit unterschiedlich abgerundeten Ecken. Jeder Seitenabschnitt 19b-1, 19b-2 weist ein Langloch 19c-1 und 19c-2 sowie zwei Befestigungslöcher 19d-1 und 19d-2 auf. Die Seitenabschnitte 19b-1 und 19b-2 sind parallel zueinander angeordnet, durch den Verbindungsabschnitt 19a beabstandet und an ihren Stirnseiten durch diesen verbunden.

Die Langlöcher 19c-1, 19c-2 befinden sich in der Hälfte der Seitenabschnitte 19b-1, 19b-2, deren Enden durch den Verbindungsabschnitt 19a verbunden sind. Längsachsen der Langlöcher 19c-1, 19c-2 liegen parallel zu den kurzen Seiten der Seitenabschnitte 19b-1, 19b-2 und parallel zueinander.

Die Befestigungslöcher 19d-1, 19d-2 sind in den Ecken der Seitenabschnitte 19b-1, 19b-2 angeordnet, welche unverbundene Enden aufweisen. Diese Ecken weisen einen kleineren Rundungsradius als die gegenüberliegenden Ecken auf. An den durch den Verbindungsabschnitt 19a verbundenen Seiten sind nur die über dem Verbindungsabschnitt 19a befindlichen Ecken abgerundet.

Eine Höhe des Verbindungsabschnitts 19a entspricht etwa zwei Dritteln der Höhe eines Seitenabschnitts 19b-1, 19b-2. Die Klammer 19 ist beispielsweise ein StanzBiegeteil aus einem metallischen Werkstoff.

Die Klammer 19 ist mit den Seitenabschnitten 19b-1, 19b-2 derart an dem Stößel 18 angebracht, dass der Grundkörper 18a des Stößels 18 zwischen den freien Seitenenden der Seitenabschnitte 19b-1, 19b-2 angeordnet ist und sich die Befestigungslöcher 19d-1, 19d-2 mit den Befestigungslöchern 18f des Grundkörpers 18a decken. Befestigungselemente 26-1, 26-2, z.B. Schrauben, fixieren die Seitenabschnitte 19b-1, 19b-2 an dem Grundkörper 18a, wie in Fig. 4 dargestellt ist. Die Lagerachselemente 21 erstrecken sich im zusammengebauten Zustand durch die Langlöcher 19c-1, 19c-2 der Klammer 19, wobei das Lager 20 zwischen den Seitenabschnitten 19b-1, 19b-2, dem Verbindungsabschnitt 19a und der Kontaktkontur 18b des Stößels 18 angeordnet ist.

Die Axialkraft der Spindel 16 wird beim Betätigen der Bremse über den Stößel 18 mittels der Kontaktkontur 18b auf das Lager 20 und das Achselement 21 in die Gabelenden 8b-1, 8b-1 des ersten Hebelendes 8b an den Bremsdrehhebel 8 weitergeleitet. Auf diese Weise bildet die Schnittstelle 12 eine abrollende Verbindung zwischen der Spindel 16 und dem Bremsdrehhebel 8.

Hierbei wird durch das Lager 20 trotz bogenförmiger Bewegung des oberen, d.h. ersten, Hebelendes 8b die Radialkraft auf die Spindel 16 minimiert. Das Bolzenelement 17 (auch eine Schraube oder ein Spannstift ist vorstellbar) dient als Sicherung, wenn die Spindel 16 am Bremsdrehhebel 8 zieht. Gleichzeitig überträgt das Bolzenelement 17 das Moment, welches an der Spindel 16 bei Betätigung anliegt. Außerdem ist das Bolzenelement 17 das Verbindungselement bei der Montage des Aktuators 13 auf die Bremse. Der axiale Kraftfluss bei Betätigung der Bremse verläuft nicht über das Bolzenelement 17, sondern geht direkt über die Ringfläche 16c der Spindel 16 in die diese kontaktierende Stirnfläche 18g des Stößels 18.

Die Klammer 19, welche mit den Befestigungselementen 26-1, 26-2 am Stößel 18 befestigt ist, hat mehrere Funktionen. Zum einen stützt sie das Moment der Spindel 16 am Bremsdrehhebel 8 ab. Zum anderen stellt die Klammer 19 sicher, dass der Stößel 18 nicht von dem Lager 20 abheben kann und somit nie außer Eingriff gerät. Aufgrund der Bogenbewegung des Hebelendes 8b besitzt die Klammer 19 die zwei Langlöcher 19c-1 und 19c-2. Da das Moment der Spindel 16 zwischen Klammer 19 und dem Hebelende 8b des Bremsdrehhebels 8 Reibung an den inneren Seitenflächen der Gabelenden 8b-1, 8b-2 erzeugt, sind zwischen den Außenflächen der Seitenabschnitte 19b-1, 19b-2 und den zusätzliche inneren Seitenflächen der Gabelenden 8b-1, 8b-2 Gleitscheiben 25-1, 25-2 platziert, um Radiallasten auf die Spindel 16 klein zu halten.

Damit bei einer Fehlfunktion des elektrischen Aktuators 13 oder bei Stromausfall ein hochdynamischer Lauf, z.B. des Hebelendes 8b, gegen einen festen Anschlag und somit eventuelle Schäden oder/und ein anschließendes Festsitzen verhindert werden können, ist ein federnder Anschlag vorgesehen. Dies wird im Folgenden im Detail erläutert.

Zu diesem Zweck weist die Schnittstelle 12 ein Führungselement 22 auf, welches das Spindelende 16b und den Stößel 18 weitgehend umgibt.

Das Führungselement 22 umfasst einen ersten Hohlzylinderabschnitt 22a mit einer Bodenwand 22b und einen zweiten Hohlzylinderabschnitt 22d mit einer Bodenwand 22c.

Der erste Hohlzylinderabschnitt 22a ist zur Spindel 16 hin geöffnet, wobei seine Bodenwand 22b eine zentrale Durchgangsöffnung 22e aufweist. Der zweite Hohlzylinderabschnitt 22d ist zum Hebelende 8b hin offen und mit seiner Bodenwand 22c, welche hier ringförmig ausgebildet ist, an dem Außenrand der Bodenwand 22b des ersten Hohlzylinderabschnitts 22a angebracht. Der zweite Hohlzylinderabschnitt 22d weist einen größeren Außendurchmesse als der erste Hohlzylinderabschnitt 22a auf. Eine axiale Länge des zweiten Hohlzylinderabschnitts 22d entspricht etwa der halben axialen Länge des ersten Hohlzylinderabschnitts 22a.

Im eingebauten Zustand des Führungselementes 22 erstreckt sich der Aufnahmeabschnitt 18c des Stößels 18 durch die Durchgangsöffnung 22e der Bodenwand 22b des ersten Hohlzylinderabschnitts 22a des Führungselementes 22, wobei eine zum Hebelende 22b weisende Stirnfläche 22f der Bodenwand 22b an einer Schulter 18e des Stößels 18 anliegt.

Weiterhin umgibt der zweite Hohlzylinderabschnitt 22d des Führungselementes 22 im eingebauten Zustand den Grundkörper 18a des Stößels 18 in axialer Richtung in etwa halber Länge. Die Außenfläche der umlaufenden Wand des zweiten Hohlzylinderabschnitts 22d ist in der Innenseite der umlaufenden Wand 15a des hier ortsfesten Aktuatorgehäuses 15 im Bereich der Öffnung 4e in der Wand 4f des Zuspannabschnitts 4a des Bremssattels 4 angeordnet. Auf diese Weise ist das Führungselement 22 in der umlaufenden Wand 15a in Richtung der Spindelachse 16a verschiebbar geführt.

Ein Verschiebeweg des Führungselementes 22 ist einerseits durch einen Sicherungsring 15c in der umlaufenden Wand 15a und andererseits durch einen federnden Anschlag mit mindestens einem Federelement 23 festgelegt.

Der erste Hohlzylinderabschnitt 22a des Führungselementes 22 ist von dem Federpaket mit dem mindestens einen Federelement 23 umgeben. Hier sind drei Federelemente 23 in Form von Tellerfedern gezeigt. Es sind natürlich auch andere Kraftspeicherelemente, wie z.B. Gummifedern, möglich. Die Federelemente 23 stützen sich axial einerseits an der Außenfläche des Bodens 22c des zweiten Hohlzylinderabschnitts 22d und andererseits an einem Stützring 24 ab. Dabei stützt sich das mindestens eine Federelement 23 radial an dem ortsfesten Aktuatorgehäuse 15 ab und ist von diesem geführt. Der Stützring 24 liegt wiederum radial und axial am ortsfesten Aktuatorgehäuse 15 an (nicht dargestellt) und verhindert Eingrabungen, welche durch die Federelemente 23 entstehen könnten.

Eine Stirnfläche 22f des zweiten Hohlzylinderabschnitts 22d liegt an dem Sicherungsring 15c an, der in der umlaufenden Wand 15a des Aktuatorgehäuses 15 in einer nicht bezeichneten Nut eingesetzt ist. Der Sicherungsring 15c bildet eine axiale Festlegung des Führungselementes 22 in Richtung auf den Bremsdrehhebel 8. Das Führungselement 22 ist durch das vorgespannte Federpaket gegen den Sicherungsring 15c gedrückt. In der anderen Richtung, welche zu dem Aktuator weist, bildet das Federpaket mit dem mindestens einen Federelement 23 den federnden Anschlag für das Führungselement 22.

In einem Fehlerfall wird ein Stoß vom Stößel 18 durch dessen Schulter 18e in die Bodenwand 22b des ersten Hohlzylinderabschnitts 22a des Führungselementes 22 eingeleitet und durch die Bodenwand 22c des zweiten Hohlzylinderabschnitts 22d des Führungselementes 22 auf die Federelemente 23 übertragen.

Durch ein unterschiedlich tiefes Einfedern des Bremsdrehhebels 8 kann das Lüftspiel negativ beeinflusst werden. Weiter unten werden Lösungen aufgezeigt, wodurch eine ursprüngliche Position und eine Startposition des Bremsdrehhebels 8 eindeutig definiert werden kann, damit die Nachstelleinrichtung 10 ein korrektes Lüftspiel einstellen kann.

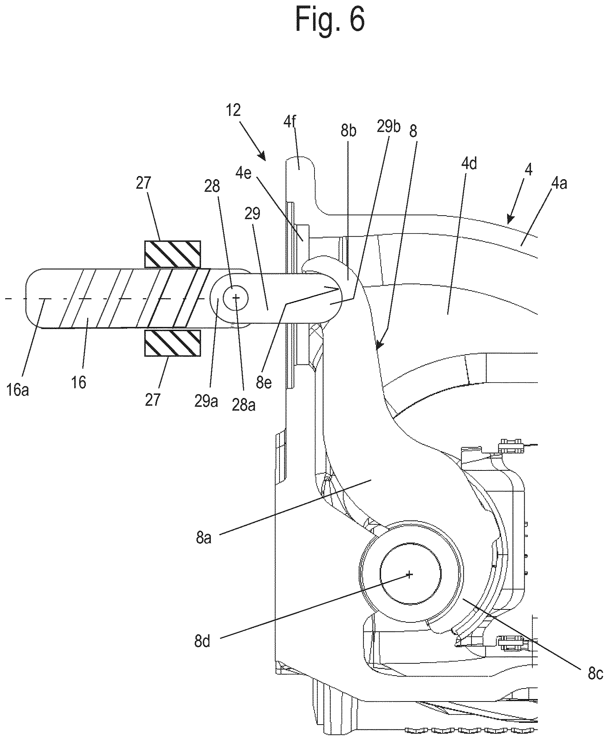

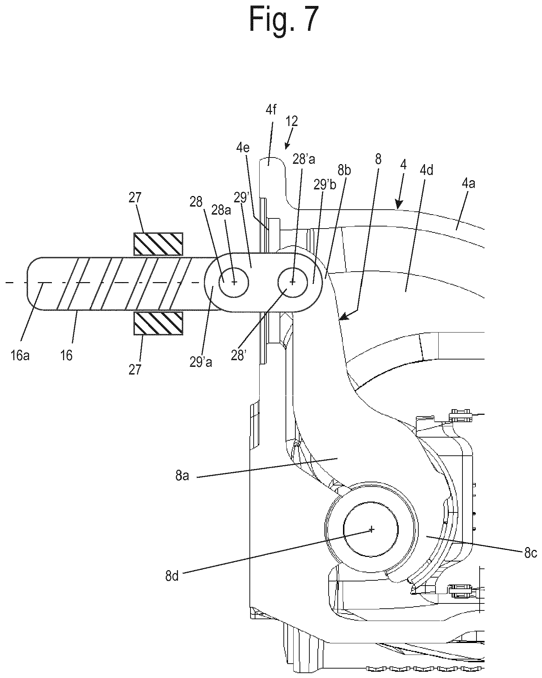

**Fig. 6** stellt eine schematische Schnittansicht eines zweiten Ausführungsbeispiels der Schnittstelle 12 dar. In **Fig. 7** ist eine schematische Schnittansicht einer Variante des zweiten Ausführungsbeispiels nach Fig. 6 gezeigt. Die in Fig. 6 und Fig. 7 gezeigten Ausführungen gehören nicht zu der vorliegenden Erfindung.

In dem zweiten Ausführungsbeispiel weist die Schnittstelle 12 einen schwenkbaren Stößel 29 auf. Dieser ist mit der Spindel 16 mit einem Stößelende 29a über ein Drehgelenk 28 verbunden. Das Drehgelenk 28 weist eine Drehgelenkachse 28a auf, welche parallel zu der Hebelachse 8d verläuft. Das andere Stößelende 29b des Stößels 29 greift in eine Vertiefung 8e des Hebelendes 8b des Bremsdrehhebels 8 ein.

Der auf diese Weise um die Drehachse 28a verschwenkbare Stößel 29 führt einen radialen Ausgleich der Bewegung des Bremsdrehhebels 8 beim Zuspannen und Lösen der Bremse aus.

Um das Drehmoment der Spindel 16 im Hebelende 8b abzustützen, ist das andere Stößelende 29b zylindrisch ausgeformt. Wird das Spindelmoment bereits im Aktuator 13 aufgenommen, kann das andere Stößelende 29b auch kugelförmig sein. Dieses zweite Ausführungsbeispiel weist eine Schnittstelle 12 mit einer einfache Verbindung auf, bei welcher der Aktuator 13 nur eine Druckkraft auf das Hebelende 8b überträgt. Eine Zugkraft kann in dieser Ausführung von dem Aktuator 13 auf das Hebelende 8b des Bremsdrehhebels 8 nicht übertragen werden.

Im Gegensatz dazu ist die Schnittstelle 12 in der Variante nach Fig. 7 derart ausgebildet, dass der Aktuator 13 das Hebelende 8b des Bremsdrehhebels 8 über einen Stößel 29' mit zwei Drehgelenken 28, 28' sowohl mit einer Druckkraft als auch mit einer Zugkraft beaufschlagen kann.

Der Stößel 29' ist mit einem ersten Stößelende 29'a über ein erstes Drehgelenk 28 mit der Spindel 16 um eine erste Drehgelenkachse 28a verschwenkbar verbunden. Ein zweites Stößelende 29'b des Stößels 29' ist über ein zweites Drehgelenk 28' an dem Hebelende 8b des Bremsdrehhebels 8 um eine zweite Drehgelenkachse 28'a verschwenkbar angelenkt. Die Drehgelenkachsen 28a und 28'a sind parallel zueinander und parallel zu der Hebelachse 8d angeordnet.

Auf diese Weise ist es möglich, dass der Aktuator 13 sowohl eine Druck- als auch eine Zugkraft auf den Bremsdrehhebel 8 ausüben kann. Eine Montage ist hierbei aufwändiger als in dem zweiten Ausführungsbeispiel nach Fig. 6.

Für das zweite Ausführungsbeispiel nach Fig. 6 und dessen Variante nach Fig. 7 ist Folgendes anzumerken.

Wählt man die Durchmesser der Drehgelenke 28, 28' möglichst klein und eine Länge des Stößels 29, 29' möglichst lang, so können die autretenden Radialkräfte auf die Spindel 16 reduziert werden.

Bei beiden Ausführungen (Fig. 6 und Fig. 7) entsteht durch Auslenkung des jeweiligen Stößels 29, 29' in Abhängigkeit der eingeleiteten Axialkraft durch die Spindel 16 eine Radialkraft (Querkraft), die durch ein zusätzliches Führungselement 27 abgestützt wird. Dieses zusätzliche Führungselement 27 kann eine längere Bauweise des Aktuators 13 bedingen.

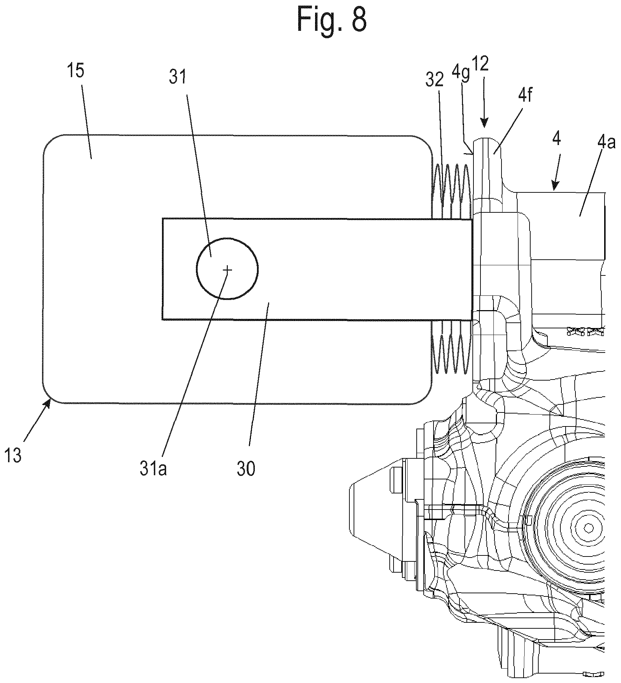

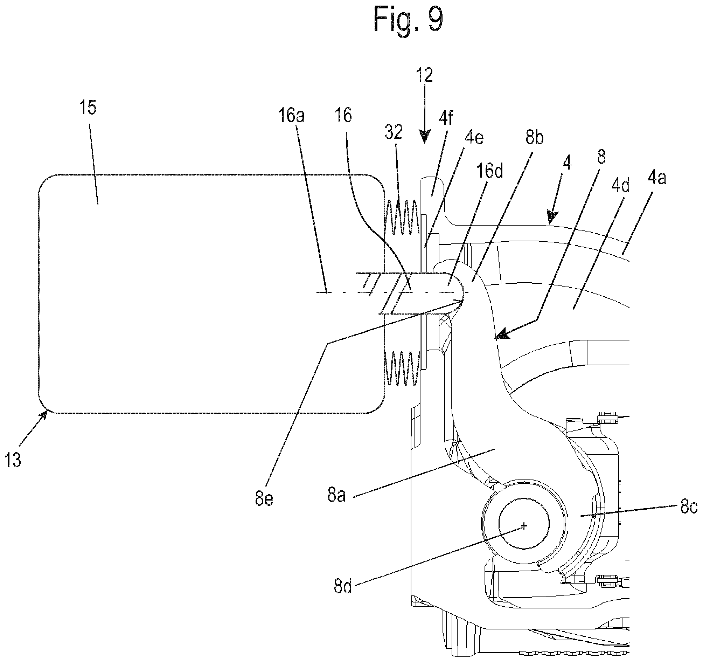

**Fig. 8** zeigt eine schematische Ansicht eines dritten Ausführungsbeispiels der erfindungsgemäßen Schnittstelle 12. In **Fig. 9** ist eine Teilschnittdarstellung des dritten Ausführungsbeispiels nach Fig. 8 gezeigt.

In dieser Lösung ist der Aktuator 13 nicht mehr starr mit dem Zuspannabschnitt 4a des Bremssattels 4 verbunden, z.B. verschraubt, sondern über ein Drehgelenk 31 an einer Halterung 30 um eine Drehgelenkachse 31 verschwenkbar angebracht. Die Halterung 30 kann hierbei ein Teil des Bremssattels 4 sein oder als ein separates Bauteil mit dem Bremssattel 4, z.B. mit dem Zuspannabschnitt 4a wie gezeigt, verbunden sein. Je nach Schwerpunkt des Aktuators 13 kann die Lage des Drehgelenkes 31 unterschiedlich ausgeführt werden. Um das Gesamtsystem abzudichten und gleichzeitig eine Verschwenkung des Aktuators 13 um die Drehgelenkachse 31a zu ermöglichen, ist zwischen dem Aktuator 13 ein flexibles Dichtelement 32, z.B. ein Faltenbalg, angebracht. Das Dichtelement ist in dem gezeigten Beispiel an der äußeren Fläche 4g des Zuspannabschnitts 4a des Bremssattels 4 um die Öffnung 4e angeordnet. Die Drehgelenkachse 31a verläuft parallel zu der Hebelachse 8d des Bremsdrehhebels 8.

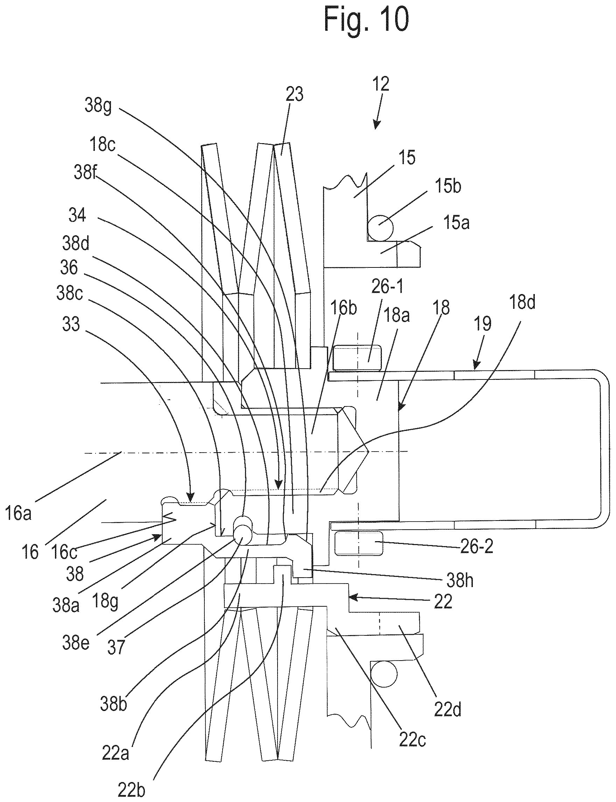

In **Fig. 10** ist eine schematische Schnittansicht eines vierten Ausführungsbeispiels der Schnittstelle 12 gezeigt, was nicht zu der vorliegenden Erfindung gehört.

Grundlage hierzu ist der Aufbau des ersten Ausführungsbeispiels nach Fig. 3, der in der oberen Hälfte (in Fig. 10) oberhalb der Spindelachse 16a schematisch wiederholt ist. In der unteren Hälfte unterhalb der Spindelachse 16a ist die Änderung des vierten Ausführungsbeispiels dargestellt.

Bei diesem vierten Ausführungsbeispiel wird die Zugfunktion zwischen Aktuator 13 und Hebelende 8b des Bremsdrehhebels 8 für einen definierten Verschiebeweg unterbrochen. Nach Überwindung dieses Verschiebewegs ist die Spindel 16 über Zwischenbauteile wieder axial mit dem Hebelende 8b gekoppelt.

Der Anschlag 4h (siehe Fig. 3) bleibt für den Bremsdrehhebel 8 erhalten. Der Anschlag 4h definiert die konstante Startposition für die Bewegung des Bremsdrehhebels 8, wodurch die Nachstelleinrichtung 10 ein korrektes Lüftspiel einstellen kann.

Wenn nach dem Anschlagen des Bremsdrehhebels 8 noch eine Restdynamik im Aktuator 13 (Spindel 16, Spindelmutter, Wälzlager, elektrischer Antriebsmotor) besteht, wird die Restenergie in die Federelemente 23 eingeleitet. Hierfür sind die Bauteile wie folgt vorgesehen und angeordnet.

Im Unterschied zu dem ersten Ausführungsbeispiel ist hier eine Freiwegkupplung 38 zwischen dem Stößel 18 und dem Führungselement 22 eingesetzt.

Die Freiwegkupplung 38 umfasst einen hohlzylindrischen Körper 38a mit einer Innenbohrung mit Innengewinde, einen weiteren hohlzylindrischen Körper mit einer Bohrung 38c, einer umlaufenden Wand 38b und einem Kragen 38h. In der umlaufenden Wand 38b ist in deren Innenseite eine umlaufende Ausnehmung 38d eingeformt, welche in axialer Richtung durch Ränder 38e, 38f begrenzt ist. Die Öffnung der Bohrung 38c ist an der Seite, welche zu der Klammer 19 weist, mit einer Fase bzw. umlaufenden Schräge 38g versehen. Der Kragen 38h steht in radialer Richtung von der Außenfläche der umlaufenden Wand 38b ab.

In einem weiteren Unterschied zu dem ersten Ausführungsbeispiel ist hier zwischen der Ringfläche 16c der Spindel 16 und der Stirnfläche 18g des Stößels 18 der hohlzylindrische Körper 38a der Freiwegkupplung 38 angeordnet, wobei das Innengewinde des Grundkörpers 38a mit einem Gewinde 33 der Spindel 16 in Eingriff steht. Die Freiwegkupplung 38 ist so im eingebauten Zustand auf die Spindel 16 aufgeschraubt und mit dieser axial und drehfest verbunden.

Ein noch weiterer Unterschied besteht darin, dass das in der Aufnahme 18d des Stößels 18 aufgenommene Spindelende 16b und die Aufnahme 18d untereinander über Längsverzahnungen 34 in Eingriff stehen. Damit ist eine drehfeste Verbindung zwischen der Spindel 16 und dem Stößel 18 gebildet, wobei aber Spindel 16 und Stößel 18 in Axialrichtung der Spindelachse 16a relativ zueinander verschiebbar sind.

Im zusammengebauten Zustand ist der Aufnahmeabschnitt 18c des Stößels 18 in der Bohrung 38c der Freiwegkupplung 38 eingesetzt. In einem zu der Spindel 16 weisenden Endbereich des Aufnahmeabschnitts 18c ist eine umlaufende Nut 36 von außen in den Aufnahmeabschnitt 18c eingeformt, in welcher ein Sicherungsring 37, vorzugsweise ein Runddrahtring, axial an dem Aufnahmeabschnitt 18c gehalten ist. Mit seinem Außendurchmesser ist der Sicherungsring 37 in der Ausnehmung 38d der umlaufenden Wand 38b der Freiwegkupplung 38 in Richtung der Spindelachse 16a verschiebbar geführt. Die axiale Länge der Ausnehmung 38d mit ihren Rändern 38e, 38f als jeweiliger Anschlag für den Sicherungsring 37, bestimmt den oben genannten Verschiebeweg.

Das Führungselement 22 ist in Bezug auf die Federelemente 23 und das Aktuatorgehäuse 15 wie im ersten Ausführungsbeispiel beschrieben angeordnet. Im Unterschied zum ersten Ausführungsbeispiel ist hier die Schulter 18e des Stößels 18 als ein umlaufender Kragen K ausgebildet, wobei zwischen diesem und der Bodenwand 22b des Führungselementes 22 der umlaufende Kragen 38h der Freiwegkupplung 38 angeordnet ist.

Die Spindel 16 ist wie oben schon beschrieben mit der Freiwegkupplung 38 z.B. über das Gewinde 33 fest verbunden. Der Sicherungsring 37 verhindert ein vollständiges Abziehen der Freiwegkupplung 38 vom Stößel 18 in Richtung der Spindelachse 16a. Für die Montage wird der Sicherungsring 37 durch die Schräge 38g an der Öffnung der Bohrung 38c der Freiwegkupplung 38 zusammengedrückt und verschwindet kurzzeitig in der umlaufenden Nut 36 des Aufnahmeabschnitts 18c des Stößels 18. Um das Spindelmoment im Bremsdrehhebel 8 (hier nicht dargestellt, aber z.B. im Zusammenhang mit Fig. 3 bis 5 leicht vorstellbar) abzustützen, ist die Längsverzahnung 34 zwischen dem Spindelende 16b und dem Stößel 18 (in der Aufnahme 18d des Aufnahmeabschnitts 18c des Stößels 18) ausgebildet. Alternativ ist auch vorstellbar, das Spindelmoment im Aktuator 13 abzustützen (nicht dargestellt).

Beim Einleiten der restlichen kinetischen Energie des Aktuators 13 wandern die Spindel 16, die Freiwegkupplung 38 und das Führungselement 22 nach links in Richtung auf den Aktuator 13 zu und komprimieren die Federelemente 23. Diese stützen sich auf ihrer linken Seite am Stützring 24 (siehe Fig. 3) und dem Aktuatorgehäuse 15 (Kontaktfläche nicht dargestellt) ab. Der maximale Federweg ist kleiner als die Freiwegstrecke der Freiwegkupplung 38. Die Freiwegstrecke der Freiwegkupplung 38 entspricht dem oben angegebenen Verschiebeweg und ist in Richtung auf den Aktuator 13 hin durch den Anschlag des Sicherungsrings 37 an dem Rand 38f der Freiwegkupplung 38 begrenzt. In der anderen Richtung ist der andere Rand 38e ein Grenze der Freiwegstrecke, aber auch der Kontakt zwischen der Stirnfläche 18g an dem Körper 38a kann einen Anschlag bilden.

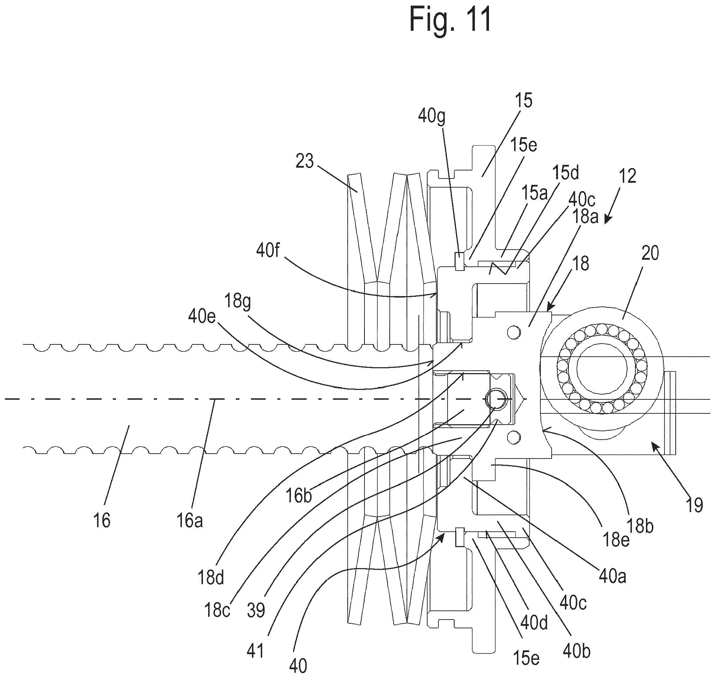

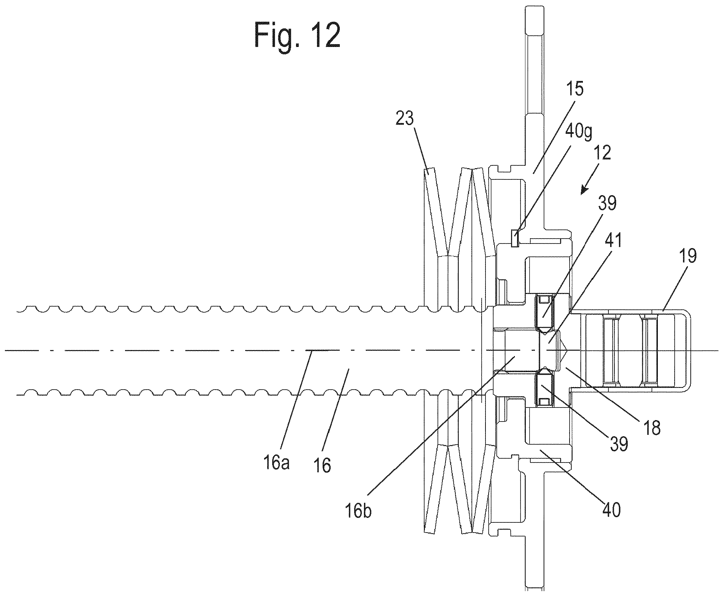

**Fig. 11** **und** **Fig. 12** zeigen schematische Schnittansichten von Varianten des ersten Ausführungsbeispiels der erfindungsgemäßen Schnittstelle nach Fig. 3 **Fig. 11** **und** **Fig. 12** stellen dabei eine erste Variante in Schnittansichten dar, die zueinander rechtwinklig verlaufen. Fig. 11 zeigt eine seitliche Schnittansicht, und Fig. 12 stellt eine Draufsicht dar.

Die Variante nach Fig. 11 und Fig. 12 weist im Gegensatz zu dem ersten Ausführungsbeispiel folgende Unterschiede auf: eine Verbindung zwischen dem Spindelende 16b und dem Stößel 18, ein verändertes Führungselement 40 und eine andere Verbindung zwischen Führungselement 40 und dem Aktuatorgehäuse 15.

Das Spindelende 16b ist in der Aufnahme 18d des Aufnahmeabschnitts 18c des Stößels 18 eingesetzt und durch eine feste Gewindeverbindung in der Aufnahme 18d in dem Stößel 18 fixiert. Die. Zwei Befestigungselemente 39, z.B. Madenschrauben, dienen als Sicherungen gegen das Lösen dieser Schraubverbindung. Spitzen dieser Befestigungselemente 39 stehen dazu mit einer Nut 41 des Spindelendes 16b in Eingriff.

Das Führungselement 40 weist einen Körper 40a mit einer zum Federpaket weisenden Stirnfläche 40f und einen hohlzylindrischen Abschnitt mit einer umlaufenden Wand 40b auf. Der Körper 40a bildet mit der umlaufenden Wand 40b einen hohlzylindrischen Abschnitt, dessen Öffnung zu dem Hebelende 8b des Bremsdrehhebels 8 weist. Der Körper 40a ist in Plattenform mit einer zentralen Durchgangsöffnung 40e ausgebildet. Zudem ist an dem Außenumfang des Körpers 40a eine nicht bezeichnete, umlaufende Nut eingeformt, in welche ein Sicherungsring 40g eingesetzt ist.

An der umlaufenden Wand 40b ist an ihrem Rand, der zum Hebelende 8b weist, ein radial nach außen hervorstehender Kragen 40c angeformt. Die umlaufende Wand 40b weist eine Außenfläche 40d auf. Im eingebauten Zustand erstreckt sich der Aufnahmeabschnitt 18c des Stößels 18 durch die Durchgangsöffnung 40e des Körpers 40a des Führungselementes 40, wobei die zum Hebelende 8b weisende Seite des Körpers 40a mit der Schulter 18e des Stößels 18 in Kontakt steht.

Das Federpaket mit dem mindestens einen Federelement 23 liegt einerseits an der Stirnfläche 40f des Körpers 40a des Führungselementes 40 und andererseits an dem (hier nicht gezeigten, aber im Zusammenhang mit Fig. 3 leicht vorstellbaren) Stützring 24 am ortsfesten Aktuatorgehäuse 15 an und drückt das Führungselement 40 mit dem Sicherungsring 40g gegen einen axialen Anschlag, welcher durch einen Kragen 15e des ortsfesten Aktuatorgehäuses 15 gebildet ist.

Die Verbindung zwischen dem Führungselement 40 und der Wand 15a des Aktuatorgehäuses 15 ist aus einem Kontakt zwischen dem Kragen 40c der umlaufenden Wand 40b des Führungselementes 40 mit einer Innenfläche 15d der Wand 15a des Aktuatorgehäuses 15 und einem Kontakt zwischen einem Kragen 15e der Wand 15a des Aktuatorgehäuses 15 und der Außenfläche 40d der umlaufenden Wand 40b des Führungselementes 40 gebildet.

Der Kragen 40c der umlaufenden Wand 40b erstreckt sich radial nach außen, und der Kragen 15e der Wand 15a erstreckt sich radial nach innen. Bei einer Bewegung des Hebelendes 8b auf den Aktuator 13 hin wird das Führungselement 40 durch seinen Kontakt über den Körper 40a mit dem Stößel 18 (Schulter 18e) mit der Stirnfläche 18f des Körpers 40a gegen die Federelemente 23 gedrückt und verschiebt sich relativ zu der umlaufenden Wand 15a. Dabei geraten an dem Körper 40a des Führungselementes 40 angebrachte Sicherungsring 40g und der Kragen 15e des Aktuatorgehäuses 15 außer Kontakt. Der Kragen 40c der umlaufenden Wand 40b des Führungselementes 40 gleitet dabei auf der Innenfläche 15d der Wand 15a und der Kragen 15e gleitet auf der Außenfläche 40d der Wand 40b des Führungselementes 40. Dieser Gleit- bzw. Verschiebeweg in Richtung der Spindelachse 16a ist einerseits durch den Kragen 15e in Verbindung mit dem Sicherungsring 40g und durch den Kragen 40c begrenzt. Mit anderen Worten, der Verschiebeweg des Führungselementes 40 ist in Richtung auf den Bremsdrehhebel 8 durch den Kontakt des Sicherungsrings 40g und des Kragens 15e begrenzt. Damit wird sichergestellt, dass die Kragen 40c und 15e in Verbindung mit ihren zugehörigen Gleitflächen (Außenfläche 40d und Innenfläche 15d) mit diesen nicht außer Kontakt geraten. In Richtung auf den Aktuator 15 hin ist der Verschiebeweg des Führungselementes 40 durch Anschlag bzw. Kontakt des Kragens 40c an bzw. mit den Kragen 15e begrenzt.

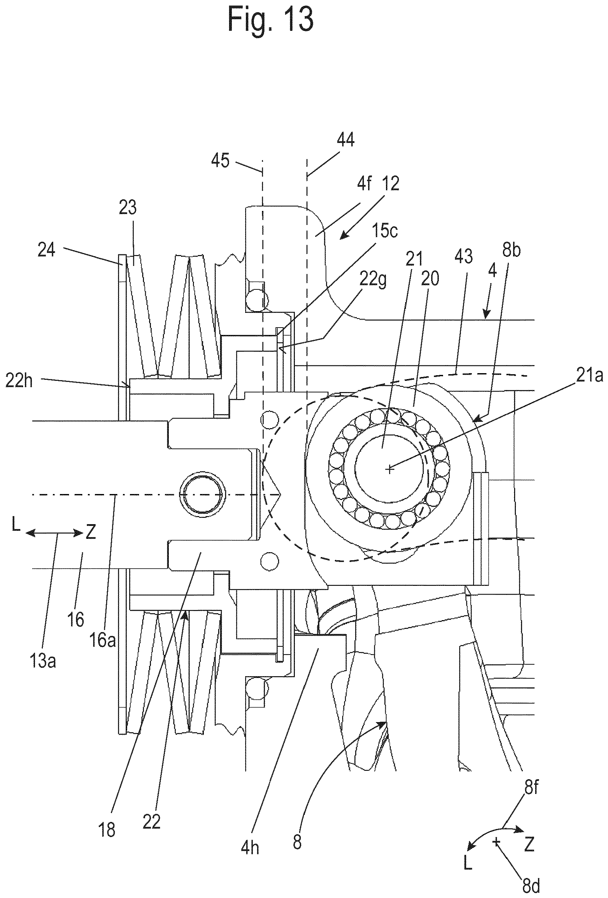

**Fig. 13** zeigt die schematische Schnittansicht nach Fig. 3 mit Darstellung von Bewegungsabläufen. In **Fig. 14** ist eine Schaltgabel 11b der Nachstelleinrichtung 10 in einer Draufsicht dargestellt. **Fig. 15** zeigt den Nachstellerantrieb 11 in einer perspektivischen Ansicht.

**Fig. 13** zeigt das erste Ausführungsbeispiel nach Fig. 3 mit zusätzlichen Einträgen. In dieser Lösung bleibt die Zugfunktion jederzeit erhalten. Der Anschlag 4h für den Bremsdrehhebel 8 wird entfernt (in Fig. 13 zur besseren Übersicht noch eingezeichnet).

Die Bewegungsrichtung 13a zeigt die Bewegung der Spindel 16 beim Zuspannen Z und Lösen L. Der Bremshebelweg 8f gibt die Schwenkbewegung des Bremsdrehhebels 8 um die Hebelachse 8d beim Zuspannen Z und Lösen L an.

Der Weg des Hebelendes 8b des Bremsdrehhebels 8 ist durch eine Hüllkurve 43 schematisch angedeutet und weist eine erste Position 44 und eine zweite Position 45 auf.

Die Position 44 definiert die übliche Startposition des Bremsdrehhebels 8 und ist somit mitverantwortlich für die Einstellung des gewünschten Lüftspiels durch die Nachstelleinrichtung 10. Da die Federelemente 23 leicht vorgespannt sind, bildet der Sicherungsring 15c den Anschlag für diese Position 44.

In **Fig. 14** ist eine Antriebsscheibe, die hier als Schaltgabel 11b bezeichnet wird, der Nachstellereinrichtung 10 mit Gabelabschnitten 11b-1, 11b-2, 11b-3 gezeigt. **Fig. 15** stellt hierzu eine Perspektivansicht des Nachstellerantriebs 11 mit einem Antriebselement 11a und der Schaltgabel 11b dar. Das Antriebselement 11a ist mit dem Bremsdrehhebel 8 verbunden und hier mit zwei Hebelpins 11a-1, 11a-2 ausgebildet. Für die weitere Beschreibung wird das Zusammenwirken des Hebelpins 11a-2 mit den Gabelabschnitten 11b-1 und 11b-2 betrachtet.

Die Schaltgabel 11b ist um die Nachstellerachse 5a (siehe auch Fig. 1) verschwenkbar und um den Trägerkörper 5b angeordnet. Der Trägerkörper 5b führt alle Teile der Nachstelleinrichtung 10. Eine ausführliche Beschreibung von Aufbau und Funktion der Nachstelleinrichtung 10 kann dem Dokument DE 10 2012 108 672 B3 entnommen werden.

Ein Abstand zwischen dem Hebelpin 11a-2 und dem Gabelabschnitt 11b-2 wird als sogenanntes konstruktives Lüftspiel 46 (kL) bezeichnet und ist proportional zum Lüftspiel zwischen Bremsbelag 3 und Bremsscheibe 2. Im Laufe des Belagverschleißes dreht sich die Schaltgabel 11b langsam im Uhrzeigersinn (in Fig. 14) mit dem Gabelabschnitt 11b-1 in Richtung Position 44, wodurch sich das konstruktive Lüftspiel 46 (kL) proportional mit dem Lüftspiel vergrößert. Damit die Nachstelleinrichtung 10 wieder ein korrektes Lüftspiel einstellen kann, muss definiert in die Federelemente 23 in eine Position 45 in der Bewegungsrichtung Lösen L gefahren werden. Die Position 45 liegt bezogen auf die Position 44 näher an dem Aktuator 13.

Eine solche Bewegung kann z.B. in bestimmten Zeitabständen ausgeführt werden. Hierbei wird die Schaltgabel 11b in ihre ursprüngliche Position 45 gedreht. Nach dem Entspannen der Federelemente 23 startet der Bremsdrehhebel 8 wieder von seiner Startposition 44. Das konstruktive Lüftspiel 46 (kL) hat nun wieder seine definierte Größe. Die ursprünglich Position 45 der Schaltgabel 11b kann beispielsweise durch den Anschlag der Stirnfläche 22h des Führungselementes 22 und einer Gegenfläche am Gehäuse 15 des Aktuators 13 (Anschlag nicht dargestellt, aber leicht vorstellbar) realisiert werden. Weiter ist es vorstellbar, über einen Encoder des elektrischen Antriebs des Aktuators 13 die Spindel 16 auf eine bestimmte Position zu fahren oder über eine definierte Motorkraft einen definierten Federweg der Federelemente 23 zu erzeugen. Dabei ist ein Endanschlag 10a (Fig. 14) der Nachstelleinrichtung 10 auf die Stirnfläche 22h des Anschlages des Führungselementes 22 bzw. auf den definierten Federweg der Federelemente 23 abgestimmt.

Eine Steuerung dieser Bewegungen kann z.B. mittels Softwaresteuerung des elektrischen Antriebs des Aktuators 13 ausgebildet sein.

In einem nicht zu der vorliegenden Erfindung gehörenden Verfahren zum Einstellen eines definierten Lüftspiels wird zunächst die Schaltgabel 11b der Nachstelleinrichtung 10 in ihre ursprüngliche Position 45 gedreht, indem der elektrische Aktuator 13 die Spindel 16 in Bewegungsrichtung 13a Lösen L verstellt, wobei die Federelemente 23 durch das Führungselement 22 gespannt werden, bis die Stirnfläche 22h des Führungselementes 22 einen Anschlag an einer Gegenfläche am Gehäuse 15 des Aktuators 13 erreicht hat. Dieser Anschlag entspricht der ursprünglichen Position 45 der Schaltgabel 11b und kann z.B. durch einen erhöhten Strom des elektrischen Antriebs des Aktuators 13 ermittelt werden. Natürlich ist es auch möglich im Falle des Vorhandenseins eines Encoders an dem elektrischen Antrieb diese Position des Anschlags mittels des Encoders zu erfassen. Wenn dieser Anschlag erreicht ist, wird der elektrische Antrieb stromlos geschaltet. Dann entspannen sich die Federelemente 23 wieder und drücken den Stößel 14 über das Führungselement 22 in Bewegungsrichtung 13a Zuspannen Z in Richtung auf den Bremsdrehhebel 8, bis das Führungselement 22 mit seiner Stirnfläche 22g an dem Sicherungsring 15c anschlägt, wodurch die Startposition 44 des Bremsdrehhebels 8 eingenommen wird. Diese Startposition 44 kann ebenfalls durch den Encoder des elektrischen Antriebs des Aktuators 13 durch Feststellen des Stillstands der Spindel 16 bzw. der Spindelmutter 16e erfasst werden.

Die Erfindung kann im Rahmen der beigefügten Ansprüche modifiziert werden.

So ist es vorstellbar, dass anstelle der einstückigen Klammer 19 auch zwei separate Verbindungselemente, d.h. zwei einzelne Seitenabschnitte 19b-1 und 19b-2, z.B. ohne den Verbindungsabschnitt 19a verwendet werden können.

Das Lager 20 kann auch anstelle des gezeigten Wälzlagers ein Gleitlager oder eine Kombination aus verschiedenen Lagertypen sein.

### BEZUGSZEICHENLISTE

- 1: Scheibenbremse
- 2: Bremsscheibe
- 2a: Bremsscheibenachse
- 3, 3a: Bremsbelag
- 4: Bremssattel
- 4a: Zuspannabschnitt
- 4b: Rückenabschnitt
- 4c: Zugstrebe
- 4d: Innenraum
- 4e: Öffnung
- 4f: Wand
- 4g: Fläche
- 4h: Anschlag
- 5, 5': Spindeleinheit
- 5a: Nachstellerachse
- 5'a: Mitnehmerachse
- 5b: Trägerkörper
- 6, 6': Gewindestempel
- 6a, 6'a: Druckstück
- 7: Brücke
- 8: Bremsdrehhebel
- 8a: Hebelkörper
- 8b, 8c: Hebelende
- 8b-1, 8b-2: Gabelende
- 8d: Hebelachse
- 8e: Vertiefung
- 8f: Bremshebelweg
- 9: Mitnehmereinrichtung
- 10: Nachstelleinrichtung
- 11: Nachstellerantrieb
- 11a: Antriebselement
- 11a-1, 11a-2: Hebelpin
- 11b: Schaltgabel
- 11b-1, 11-2: Gabelabschnitt
- 12: Schnittstelle
- 13: Aktuator
- 13a: Bewegungsrichtung
- 14: Stößel
- 15: Aktuatorgehäuse
- 15a: Wand
- 15b: Dichtung
- 15c: Sicherungsring
- 15d: Innenfläche
- 15e: Kragen
- 16: Spindel
- 16a: Spindelachse
- 16b: Spindelende
- 16c: Ringfläche
- 16d: Endabschnitt
- 16e: Spindelmutter
- 17: Bolzenelement
- 17a: Bolzenelementachse
- 18: Stößel
- 18a: Grundkörper
- 18b: Kontaktkontur
- 18c: Aufnahmeabschnitt
- 18d: Aufnahme
- 18e: Schulter
- 18f: Befestigungsloch
- 18g: Stirnfläche
- 19: Klammer
- 19a: Verbindungsabschnitt
- 19b-1, 19b-2: Seitenabschnitt
- 19c-1, 19c-2: Langloch
- 19d-1, 19d-2: Befestigungsloch
- 20: Lager
- 21: Lagerachselement
- 21a: Lagerachse
- 21b: Unterlegscheibe
- 21c: Wellensicherung
- 22: Führungselement
- 22a, d: Hohlzylinderabschnitt
- 22b, 22c: Bodenwand
- 22e: Durchgangsöffnung
- 22f, 22g, 22h: Stirnfläche
- 23: Federelement
- 24: Stützring
- 25-1, 25-2: Gleitscheibe
- 26-1, 26-2: Befestigungselement
- 27: Führungselement
- 28, 28': Drehgelenk
- 28a, 28'a: Drehgelenkachse
- 29, 29': Stößel
- 29a, 29'a; 29b, 29'b: Stößelende
- 30: Halterung
- 31: Drehgelenk
- 31a: Drehgelenkachse
- 32: Dichtelement
- 33: Gewinde
- 34: Längsverzahnung
- 35: Kragen
- 36: Nut
- 37: Sicherungsring
- 38: Freiwegkupplung
- 38a: Körper
- 38b: Wand
- 38c: Bohrung
- 38d: Ausnehmung
- 38e, 38f: Rand
- 38g: Schräge
- 38h: Kragen
- 39: Befestigungselement
- 40: Führungselement
- 40a: Körper
- 40b: Wand
- 40c: Kragen
- 40d: Außenfläche
- 40e: Durchgangsöffnung
- 40f: Stirnseite
- 40g: Sicherungsring
- 41: Nut
- 42: Zwischenelement
- 42a: Wand
- 42b: Kragen
- 42c: Boden
- 43: Hüllkurve
- 44, 45: Position
- 46: Lüftspiel

- L: Lösen
- T: Bremsträger
- Z: Zuspannen
- ZV: Zuspannvorrichtung

## Patentansprüche

1. Scheibenbremse (1) mit einem elektrischen Aktuator (13), insbesondere für ein Kraftfahrzeug, mit einem eine Bremsscheibe (2) übergreifenden Bremssattel (4), in welchem eine Zuspannvorrichtung (ZV) mit einem Bremsdrehhebel (8) mit einer Hebelachse (8d) angeordnet ist, wobei der elektrische Aktuator (13) mit einer Spindel (16) auf den Bremsdrehhebel (8) einwirkt,
wobei die Spindel (16) über eine Schnittstelle (12) auf den Bremsdrehhebel (8) einwirkt, wobei die Schnittstelle (12) zwischen der Spindel (16) des elektrischen Aktuators (13) und dem Bremsdrehhebel (8) angeordnet ist und einen Stößel (18, 29, 29') aufweist, welcher direkt mit der Spindel (16) des elektrischen Aktuators (13) verbunden ist und mit dem Bremsdrehhebel (8) verbunden ist,
wobei der Stößel (18) einen Aufnahmeabschnitt (18c) mit einer Aufnahme (18d) aufweist, wobei ein Spindelende (16b) der Spindel (16) in der Aufnahme (18d) aufgenommen ist,
wobei das Spindelende (16b) der Spindel (16) in der Aufnahme (18d) des Aufnahmeabschnitts (18c) des Stößels (18) mit einem Bolzenelement (17) fixiert ist,
wobei eine Ringfläche (16c) der Spindel (16) mit einer Stirnfläche (18g) des Aufnahmeabschnitts (18c) des Stößels (18) in Kontakt steht und eine Druckkraft auf den Stößel (18) überträgt,
wobei der Stößel (18) mit einem federnden Anschlag mit mindestens einem Federelement (23) über ein Führungselement (22) in Zusammenwirkung steht,
**dadurch gekennzeichnet, dass**
das Führungselement (22) einen ersten Hohlzylinderabschnitt (22a) mit einer Bodenwand (22b) und einen zweiten Hohlzylinderabschnitt (22d) mit einer Bodenwand (22c) umfasst, wobei sich der Aufnahmeabschnitt (18c) des Stößels (18) durch eine Durchgangsöffnung (22e) der Bodenwand (22b) des ersten Hohlzylinderabschnitts (22a) des Führungselementes (22) erstreckt und wobei eine Stirnfläche (22f) der Bodenwand (22b) an einer Schulter (18e) des Stößels (18) anliegt.

2. Scheibenbremse (1) nach Anspruch 1,
**dadurch gekennzeichnet, dass**
der Stößel (18) mit einem Hebelende (8b) des Bremsdrehhebels (8) über ein an dem Hebelende (8b) drehbar befestigtes Lager (20) verbunden ist.

3. Scheibenbremse (1) nach Anspruch 2,
**dadurch gekennzeichnet, dass**
der Stößel (18) einen Grundkörper (18a) mit einer Kontaktkontur (18b) aufweist, wobei die Kontaktkontur (18b) mit dem an dem Hebelende (8b) des Bremsdrehhebels (8) drehbar befestigten Lager (20) in Kontakt steht und eine Abrollfläche für das Lager (20) bildet.

4. Scheibenbremse (1) nach Anspruch 3,
**dadurch gekennzeichnet, dass**
der Stößel (18) mit einer Klammer (19) verbunden ist, welche mindestens einen Seitenabschnitt (19b-1, 19b-2) mit einem Langloch (19c-1, 19c-2) aufweist, wobei sich ein Lagerachselement (21) des Lagers (20) durch das Langloch (19c-1, 19c-2) erstreckt.

5. Scheibenbremse (1) nach Anspruch 4,
**dadurch gekennzeichnet, dass**
die Klammer (19) in einer U-Form ausgebildet ist und einen Verbindungsabschnitt (19a) und zwei Seitenabschnitte (19b-1, 19b-2) mit jeweils einem Langloch (19c-1, 19-c2) umfasst, wobei die Klammer (19) mit ihren Seitenabschnitten (19b-1, 19b-2) an dem Stößel (18) befestigt ist, und wobei sich das Lagerachselement (21) des Lagers (20) durch die Langlöcher (19c-1, 19c-2) erstreckt.

6. Scheibenbremse (1) nach einem der Ansprüche 2 bis 5,
**dadurch gekennzeichnet, dass**
das Hebelende (8b) des Bremsdrehhebels (8) gabelförmig mit zwei Gabelenden (8b-1, 8b-2) ausgebildet ist.

7. Scheibenbremse (1) nach Anspruch 6,
**dadurch gekennzeichnet, dass**
zwischen jedem Seitenabschnitt (19b-1, 19b-2) der Klammer (19) und jeweils einem Gabelende (8b-1, 8b-2) eine Gleitscheibe (25-1, 25-2) angeordnet ist.

8. Scheibenbremse (1) nach Anspruch 1,
**dadurch gekennzeichnet, dass**
das Führungselement (22) mit dem zweiten Hohlzylinderabschnitt (22d) in einer umlaufenden Wand (15a) eines an dem Bremssattel befestigten ortsfesten Aktuatorgehäuses (15) verschiebbar in Richtung einer Spindelachse (16a) der Spindel (16) des Aktuators (13) geführt ist.

9. Scheibenbremse (1) nach Anspruch 8,
**dadurch gekennzeichnet, dass**
ein Verschiebeweg des in der umlaufenden Wand (15a) des Aktuatorgehäuses (15) verschiebbar geführten Führungselementes (22) einerseits durch einen Sicherungsring (15c) in der umlaufenden Wand (15a) und andererseits durch den federnden Anschlag mit dem mindestens einen Federelement (23) festgelegt ist.

10. Scheibenbremse (1) nach Anspruch 9,
**dadurch gekennzeichnet, dass**
der erste Hohlzylinderabschnitt (22a) des Führungselementes (22) von dem mindestens einen Federelement (23) umgeben ist, welches sich axial einerseits an dem Boden (22c) des zweiten Hohlzylinderabschnitts (22d) des Führungselementes (22) und andererseits an einem Stützring (24) an dem ortsfesten Aktuatorgehäuse (15) abstützt, und wobei sich das mindestens eine Federelement (23) radial an dem ortsfesten Aktuatorgehäuse (15) abstützt und von diesem geführt ist.

11. Scheibenbremse (1) nach Anspruch 9 oder 10,
**dadurch gekennzeichnet, dass**
der zweite Hohlzylinderabschnitt (22d) durch die Federkraft des vorgespannten mindestens einen Federelementes (23) an dem Sicherungsring (15c) in der umlaufenden Wand (15a) des ortsfesten Aktuatorgehäuses (15) anliegt.

12. Scheibenbremse (1) mit einem elektrischen Aktuator (13), insbesondere für ein Kraftfahrzeug, mit einem eine Bremsscheibe (2) übergreifenden Bremssattel (4), in welchem eine Zuspannvorrichtung (ZV) mit einem Bremsdrehhebel (8) mit einer Hebelachse (8d) angeordnet ist, wobei der elektrische Aktuator (13) mit einer Spindel (16) auf den Bremsdrehhebel (8) einwirkt,
wobei die Spindel (16) über eine Schnittstelle (12) auf den Bremsdrehhebel (8) einwirkt, wobei die Schnittstelle (12) zwischen der Spindel (16) des elektrischen Aktuators (13) und dem Bremsdrehhebel (8) angeordnet ist und einen Stößel (18, 29, 29') aufweist, welcher direkt mit der Spindel (16) des elektrischen Aktuators (13) verbunden ist und mit dem Bremsdrehhebel (8) verbunden ist,
wobei der Stößel (18) einen Aufnahmeabschnitt (18c) mit einer Aufnahme (18d) aufweist, wobei ein Spindelende (16b) der Spindel (16) in der Aufnahme (18d) aufgenommen ist,
wobei das Spindelende (16b) der Spindel (16) in der Aufnahme (18d) des Aufnahmeabschnitts (18c) des Stößels (18) mit einem Bolzenelement (17) fixiert ist,
wobei eine Ringfläche (16c) der Spindel (16) mit einer Stirnfläche (18g) des Aufnahmeabschnitts (18c) des Stößels (18) in Kontakt steht und eine Druckkraft auf den Stößel (18) überträgt,
wobei der Stößel (18) mit einem federnden Anschlag mit mindestens einem Federelement (23) über ein Führungselement (40) in Zusammenwirkung steht,
**dadurch gekennzeichnet, dass**
das Führungselement (40) einen Körper (40a) mit einer zentralen Durchgangsöffnung (40e) und einen hohlzylindrischen Abschnitt mit einer umlaufenden Wand (40b) aufweist, und wobei an der umlaufenden Wand (40b) an ihrem Rand ein radial nach außen hervorstehender Kragen (40c) angeformt ist.

13. Scheibenbremse (1) nach Anspruch 12,
**dadurch gekennzeichnet, dass**
sich der Stößel (18) durch die Durchgangsöffnung (40e) des Körpers (40a) des Führungselementes (40) erstreckt, wobei eine Seite des Körpers (40a) des Führungselementes (40) mit der Schulter (18e) des Stößels (18) in Kontakt steht.

14. Scheibenbremse (1) nach Anspruch 12,
**dadurch gekennzeichnet, dass**
zwischen dem Führungselement (40) und dem Stößel (18) ein Zwischenelement (42) angeordnet ist, wobei das Zwischenelement (42) einen hohlzylindrischen Abschnitt mit einer umlaufenden Wand (42a) mit einem sich radial nach außen erstreckenden Kragen (42b) und mit einem Boden (42c) mit einer zentralen Öffnung aufweist.

15. Scheibenbremse (1) nach Anspruch 14,
**dadurch gekennzeichnet, dass**
das Zwischenelement (42) mit seinem Boden (42c) an einem Außendurchmesser der Ringfläche (16c) der Spindel (16) angeordnet ist, wobei eine Außenfläche der umlaufenden Wand (42a) mit der Innenseite der Durchgangsöffnung (40e) des Körpers (40a) des Führungselementes (40) in Kontakt steht, und wobei der sich radial nach außen erstreckende Kragen (42b) des Zwischenelementes (42) zwischen dem Körper (40a) des Führungselementes (40) und der Schulter (18e) des Stößels (18) angeordnet ist.

16. Scheibenbremse (1) nach einem der Ansprüche 12 bis 15,
**dadurch gekennzeichnet, dass**
das Führungselement (40) mit einem Kontakt zwischen dem Kragen (40c) der umlaufenden Wand (40b) des Führungselementes (40) mit einer Innenfläche (15d) der Wand (15a) des Aktuatorgehäuses (15) und mit einem Kontakt zwischen einem Kragen (15e) der Wand (15a) des Aktuatorgehäuses (15) und der Außenfläche (40d) der umlaufenden Wand (40b) des Führungselementes (40) verschiebbar in Richtung einer Spindelachse (16a) der Spindel (16) des Aktuators (13) geführt ist.

17. Scheibenbremse (1) nach Anspruch 16,
**dadurch gekennzeichnet, dass**
ein Verschiebeweg des in der umlaufenden Wand (15a) des Aktuatorgehäuses (15) verschiebbar geführten Führungselementes (40) einerseits durch den Kragen (40c) der umlaufenden Wand (40b) des Führungselementes (40) in Verbindung mit einem Sicherungsring (40g) und andererseits durch den Kragen (15e) der Wand (15a) des Aktuatorgehäuses (15) festgelegt ist.

18. Scheibenbremse (1) nach Anspruch 17,
**dadurch gekennzeichnet, dass**
sich das mindestens eine Federelement (23) axial einerseits an der Stirnfläche (40f) des Körpers (40a) des Führungselementes (40) und andererseits an einem Stützring (24) am ortsfesten Aktuatorgehäuse (15) an dem ortsfesten Aktuatorgehäuse (15) abstützt, und wobei sich das mindestens eine Federelement (23) radial an dem ortsfesten Aktuatorgehäuse (15) abstützt und von diesem geführt ist.

19. Scheibenbremse (1) nach Anspruch 18,
**dadurch gekennzeichnet, dass**
das Führungselement (40) durch die Federkraft des vorgespannten mindestens einen Federelementes (23) mit dem Sicherungsring (40g) an dem Kragen (15e) der umlaufenden Wand (15a) des ortsfesten Aktuatorgehäuses (15) anliegt.

20. Scheibenbremse (1) nach einem der vorhergehenden Ansprüche,
**dadurch gekennzeichnet, dass**
die Spindel (16) des elektrischen Aktuators (13) als eine Kugelgewindespindel ausgebildet ist.

21. Scheibenbremse (1) mit einem elektrischen Aktuator (13), insbesondere für ein Kraftfahrzeug, mit einem eine Bremsscheibe (2) übergreifenden Bremssattel (4), in welchem eine Zuspannvorrichtung (ZV) mit einem Bremsdrehhebel (8) mit einer Hebelachse (8d) angeordnet ist, wobei der elektrische Aktuator (13) mit einer Spindel (16) direkt oder über ein Getriebe auf den Bremsdrehhebel (8) einwirkt,
**dadurch gekennzeichnet, dass**
der elektrische Aktuator (13) über ein Drehgelenk (31) an einer Halterung (30), die an dem Bremssattel (4) befestigt ist oder ein Teil des Bremssattels (4) ist, verschwenkbar angebracht ist.

22. Scheibenbremse (1) nach Anspruch 21,
**dadurch gekennzeichnet, dass**
zwischen dem elektrischen Aktuator (13) und dem Bremssattel (4) ein flexibles Dichtelement (32) angebracht ist.

## Claims

1. Disc brake (1) with an electric actuator (13), in particular for a motor vehicle, with a brake saddle (4) engaging over a brake disc (2), in which a tensioning device (ZV) is arranged with a brake rotary lever (8) with a lever axis (8d), wherein the electric actuator (13) acts with a spindle (16) on the brake rotary lever (8),
wherein the spindle (16) acts via an interface (12) on the brake rotary lever (8), wherein the interface (12) is arranged between the spindle (16) of the electric actuator (13) and the brake rotary lever (8) and has a tappet (18, 29, 29') which is connected directly to the spindle (16) of the electric actuator (13) and is connected to the brake rotary lever (8),
wherein the tappet (18) has a receiving portion (18c) with a receptacle (18d), wherein a spindle end (16b) of the spindle (16) is accommodated in the receptacle (18d),
wherein the spindle end (16b) of the spindle (16) is fixed in the receptacle (18d) of the receiving portion (18c) of the tappet (18) with a bolt element (17), wherein an annular surface (16c) of the spindle (16) is in contact with an end face (18g) of the receiving portion (18c) of the tappet (18) and transfers a press force onto the tappet (18),
wherein the tappet (18) is in cooperation with a resilient abutment with at least one spring element (23) via a guiding element (22),
**characterized in that**
the guiding element (22) comprises a first hollow cylindrical portion (22a) with a base wall (22b) and a second hollow cylindrical portion (22d) with a base wall (22c), wherein the receiving portion (18c) of the tappet (18) extends through a through-opening (22e) of the base wall (22b) of the first hollow cylindrical portion (22a) of the guiding element (22) and wherein an end face (22f) of the base wall (22b) rests on a shoulder (18e) of the tappet (18).

2. Disc brake (1) according to claim 1,
**characterized in that**
the tappet (18) is connected with a lever end (8b) of the brake rotary lever (8) via a bearing (20) fixed rotatably at the lever end (8b).

3. Disc brake (1) according to claim 2,
**characterized in that**
the tappet (18) has a basic body (18a) with a contact contour (18b), wherein the contact contour (18b) is in contact with the bearing (20) fixed rotatably at the lever end (8b) of the brake rotary lever (8) and forms a roll-off surface for the bearing (20).

4. Disc brake (1) according to claim 3,
**characterized in that**
the tappet (18) is connected with a bracket (19) which has at least one side portion (19b-1, 19b-2) with an elongate hole (19c-1, 19c-2), wherein a bearing axle element (21) of the bearing (20) extends through the elongate hole (19c-1, 19c-2).

5. Disc brake (1) according to claim 4,
**characterized in that**
the bracket (19) is U-shaped and comprises a connecting portion (19a) and two side portions (19b-1, 19b-2) having one elongate hole (19c-1, 19c-2) respectively, wherein the bracket (19) is fastened with its side portions (19b-1, 19b-2) to the tappet (18), and wherein the bearing axle element (21) of the bearing (20) extends through the elongate holes (19c-1, 19c-2).

6. Disc brake (1) according to any of claims 2 to 5,
**characterized in that**
the lever end (8b) of the brake rotary lever (8) is fork-shaped with two fork ends (8b-1, 8b-2).

7. Disc brake (1) according to claim 6,
**characterized in that**
a sliding disc (25-1, 25-2) is arranged between each side portion (19b-1, 19b-2) of the brackets and each fork end (8b-1, 8b-2).

8. Disc brake (1) according to claim 1,
**characterized in that**
the guiding element (22) is guided with the second hollow cylinder portion (22d) in a surrounding wall (15a) of a stationary actuator housing (15) fastened at the brake saddle displaceably in the direction of a spindle axis (16a) of the spindle (16) of the actuator (13).

9. Disc brake (1) according to claim 8,
**characterized in that**
a displacement path of the guiding element (22) guided displaceably in the surrounding wall (15a) of the actuator housing (15) is fixed on the one hand by a securing ring (15c) and the surrounding wall (15a) and on the other hand by the resilient abutment with the at least one spring element (23).

10. Disc brake (1) according to claim 9,
**characterized in that**
the first hollow cylindrical portion (22a) of the guiding element (22) is surrounded by the at least one spring element (23) which is supported axially on the one hand against the base (22c) of the second hollow cylindrical portion (22d) of the guiding element (22) and on the other hand against a supporting ring (24) at the stationary actuator housing (15), and wherein the at least one spring element (23) is supported radially against the stationary actuator housing (15) and is guided thereby.

11. Disc brake (1) according to claim 9 or 10,
**characterized in that**
the second hollow cylindrical portion (22d) rests as a result of the spring force of the biased at least one spring element (23) at the securing ring (15c) in the surrounding wall (15a) of the stationary actuator housing (15).

12. Disc brake (1) with an electric actuator (13), in particular for a motor vehicle, with a brake saddle (4) engaging over a brake disc (2), in which a tensioning device (ZV) is arranged with a brake rotary lever (8) with a lever axis (8d), wherein the electric actuator (13) acts with a spindle (16) on the brake rotary lever (8),
wherein the spindle (16) acts via an interface (12) on the brake rotary lever (8), wherein the interface (12) is arranged between the spindle (16) of the electric actuator (13) and the brake rotary lever (8) and has a tappet (18, 29, 29') which is connected directly to the spindle (16) of the electric actuator (13) and is connected to the brake rotary lever (8),
wherein the tappet (18) has a receiving portion (18c) with a receptacle (18d), wherein a spindle end (16b) of the spindle (16) is accommodated in the receptacle (18d),
wherein the spindle end (16b) of the spindle (16) is fixed in the receptacle (18d) of the receiving portion (18c) of the tappet (18) with a bolt element (17), wherein an annular surface (16c) of the spindle (16) is in contact with an end face (18g) of the receiving portion (18c) of the tappet (18) and transfers a press force onto the tappet (18),
wherein the tappet (18) is in cooperation with a resilient abutment with at least one spring element (23) via a guiding element (40),
**characterized in that**
the guiding element (40) has a body (40a) with a central through-opening (40e) and a hollow cylindrical portion with a surrounding wall (40b), and wherein a collar (40c) projecting radially to the outside is formed at the surrounding wall (40b) at its edge.

13. Disc brake (1) according to claim 12,
**characterized in that**
the tappet (18) extends through the through-opening (40e) of the guiding element (40), wherein a side of the body (40a) of the guiding element (40) is in contact with the shoulder (18e) of the tappet (18).

14. Disc brake (1) according to claim 12,
**characterized in that**
between the guiding element (40) and the tappet (18) an intermediate element (42) is arranged, wherein the intermediate element (42) has a hollow cylindrical portion with a surrounding wall (42a) with a collar (42b) extending radially to the outside and with a base (42c) with a central opening.

15. Disc brake (1) according to claim 14,
**characterized in that**
the intermediate element (42) is arranged with its base (42c) at an outer diameter of the annular surface (16c) of the spindle (16), wherein an outer surface of the surrounding wall (42a) is in contact with the inner side of the through-opening (40e) of the body (40a) of the guiding element (40), and wherein the collar (42b) of the intermediate element (42) which extends radially to the outside is arranged between the body (40a) of the guiding element (40) and the shoulder (18e) of the tappet (18).

16. Disc brake (1) according to any one of claims 12 to 15,
**characterized in that**
the guiding element (40) is guided with a contact between the collar (40c) of the surrounding wall (40b) of the guiding element (40) with an inner surface (15d) of the wall (15a) of the actuator housing (15) and with a contact between a collar (15e) of the wall (15a) of the actuator housing (15) and the outer surface (40d) of the surrounding wall (40b) of the guiding element (40) displaceably in the direction of a spindle axis (16a) of the spindle (16) of the actuator (13).

17. Disc brake (1) according to claim 16,
**characterized in that**
a displacement path of the guiding element (40) guided displaceably in the surrounding wall (15a) of the actuator housing (15) is fixed on one hand by the collar (40c) of the surrounding wall (40b) of the guiding element (40) in connection with a securing ring (40g) and on the other hand by the collar (15e) of the wall (15a) of the actuator housing (15).

18. Disc brake (1) according to claim 17,
**characterized in that**
the at least one spring element (23) is supported axially on the one hand at the end face (40f) of the body (40a) of the guiding element (40) and on the other hand at a supporting ring (24) at the stationary actuator housing (15) at the stationary actuator housing (15), and wherein the at least one spring element (23) is supported radially at the stationary actuator housing (15) and is guided thereby.

19. Disc brake (1) according to claim 18,
**characterized in that**
the guiding element (40) rests as a result of the spring force of the biased at least one spring element (23) with the securing ring (40g) on the collar (15e) of the surrounding wall (15a) of the stationary actuator housing (15).

20. Disc brake (1) according to any of the preceding claims,
**characterized in that**
the spindle (16) of the electric actuator (13) is designed as a ball screw spindle.

21. Disc brake (1) with an electric actuator (13), in particular for a motor vehicle, with a brake saddle (4), engaging over a brake disc (2), in which a tensioning device (ZV) is arranged with a brake rotary lever (8) with a lever axis (8d), wherein the electric actuator (13) acts with a spindle (16) directly or via a gear on the brake rotary lever (8), **characterized in that**
the electric actuator (13) is pivotably mounted via a rotary joint (31) on a holder (30), which is fastened to the brake saddle (4) or is a part of the brake saddle (4).

22. Disc brake (1) according to claim 21,
**characterized in that**
a flexible sealing element (32) is mounted between the electric actuator (13) and the brake saddle (4).

## Revendications

1. Frein à disque (1) avec un actionneur électrique (13), en particulier pour un véhicule automobile, avec un étrier de frein (4) chevauchant un disque de frein (2), étrier dans lequel un dispositif de serrage (ZV) est disposé avec un levier rotatif de frein (8) avec un axe de levier (8d), dans lequel l'actionneur électrique (13) agit avec une broche (16) sur le levier rotatif de frein (8),
dans lequel la broche (16) agit sur le levier rotatif de frein (8) par l'intermédiaire d'une interface (12), dans lequel l'interface (12) est disposée entre la broche (16) de l'actionneur électrique (13) et le levier rotatif de frein (8) et présente un poussoir (18, 29, 29') qui est connecté directement à la broche (16) de l'actionneur électrique (13) et connecté au levier rotatif de frein (8),
dans lequel le poussoir (18) présente une section de logement (18c) avec un logement (18d), dans lequel une extrémité de broche (16b) de la broche (16) est logée dans le logement (18d),
dans lequel l'extrémité de broche (16b) de la broche (16) est fixée dans le logement (18d) de la section de logement (18c) du poussoir (18) avec un élément de boulon (17), dans lequel une surface de bague (16c) de la broche (16) est en contact avec une surface frontale (18g) de la section de logement (18c) du poussoir (18) et transmet une force de pression sur le poussoir (18),
dans lequel le poussoir (18) est en coopération avec une butée élastique avec au moins un élément élastique (23) par l'intermédiaire d'un élément guide (22),
**caractérisé en ce que**
l'élément guide (22) comprend une première section cylindrique creuse (22a) avec une paroi de fond (22b) et une seconde section cylindrique creuse (22d) avec une paroi de fond (22c), dans lequel la section de logement (18c) du poussoir (18) s'étend à travers une ouverture traversante (22e) de la paroi de fond (22b) de la première section cylindrique creuse (22a) de l'élément guide (22) et dans lequel une surface frontale (22f) de la paroi de fond (22b) repose contre un épaulement (18e) du poussoir (18).

2. Frein à disque (1) selon la revendication 1,
**caractérisé en ce que**
le poussoir (18) est connecté à une extrémité de levier (8b) du levier rotatif de frein (8) par l'intermédiaire d'un palier (20) fixé de manière rotative à l'extrémité de levier (8b).

3. Frein à disque (1) selon la revendication 2,
**caractérisé en ce que**
le poussoir (18) présente un corps de base (18a) avec un contour de contact (18b), dans lequel le contour de contact (18b) est en contact avec le palier (20) fixé de manière rotative sur l'extrémité de levier (8b) du levier rotatif de frein (8) et forme une surface de roulement pour le palier (20).

4. Frein à disque (1) selon la revendication 3,
**caractérisé en ce que**
le poussoir (18) est connecté à une agrafe (19) qui présente au moins une section latérale (19b-1, 19b-2) avec un trou oblong (19c-1, 19c-2), dans lequel un élément d'axe de palier (21) du palier (20) s'étend à travers le trou oblong (19c-1, 19c-2).

5. Frein à disque (1) selon la revendication 4,
**caractérisé en ce que**
l'agrafe (19) est conçue en forme de U et comprend une section de connexion (19a) et deux sections latérales (19b-1, 19b-2) avec respectivement un trou oblong (19c-1, 19-c2), dans lequel l'agrafe (19) est fixée par ses sections latérales (19b-1, 19b-2) au poussoir (18), et dans lequel l'élément d'axe de palier (21) du palier (20) s'étend à travers les trous oblongs (19c-1, 19c-2).

6. Frein à disque (1) selon l'une quelconque des revendications 2 à 5,
**caractérisé en ce que**
l'extrémité de levier (8b) du levier rotatif de frein (8) est conçue en forme de fourche avec deux extrémités de fourche (8b-1, 8b-2).

7. Frein à disque (1) selon la revendication 6,
**caractérisé en ce que**
un disque de glissement (25-1, 25-2) est disposé entre respectivement chaque section latérale (19b-1, 19b-2) de l'agrafe (19) et respectivement une extrémité de fourche (8b-1, 8b-2).

8. Frein à disque (1) selon la revendication 1,
**caractérisé en ce que**
l'élément guide (22) est guidé avec la seconde section cylindrique creuse (22d) dans une paroi périphérique (15a) d'un boîtier d'actionneur stationnaire (15) fixé à l'étrier de frein de manière déplaçable en direction d'un axe de broche (16a) de la broche (16) de l'actionneur (13).

9. Frein à disque (1) selon la revendication 8,
**caractérisé en ce que**
une course de déplacement de l'élément guide (22) guidé de manière déplaçable dans la paroi périphérique (15a) du boîtier d'actionneur (15) est fixée d'une part par une bague d'arrêt (15c) dans la paroi périphérique (15a) et d'autre part par la butée élastique avec l'au moins un élément élastique (23).

10. Frein à disque (1) selon la revendication 9,
**caractérisé en ce que**
la première section cylindrique creuse (22a) de l'élément guide (22) est entourée par l'au moins un élément élastique (23) qui s'appuie axialement d'une part sur le fond (22c) de la seconde section cylindrique creuse (22d) de l'élément guide (22) et d'autre part sur une bague d'appui (24) sur le boîtier d'actionneur stationnaire (15), et dans lequel l'au moins un élément élastique (23) s'appuie radialement sur le boîtier d'actionneur stationnaire (15) et est guidé par celui-ci.

11. Frein à disque (1) selon la revendication 9 ou 10,
**caractérisé en ce que**
la seconde section cylindrique creuse (22d) s'appuie contre la bague d'arrêt (15c) dans la paroi périphérique (15a) du boîtier d'actionneur stationnaire (15) par la force élastique de l'au moins un élément élastique (23) précontraint.

12. Frein à disque (1) avec un actionneur électrique (13), en particulier pour un véhicule automobile, avec un étrier de frein (4) chevauchant un disque de frein (2), étrier dans lequel un dispositif de serrage (ZV) est disposé avec un levier rotatif de frein (8) avec un axe de levier (8d), dans lequel l'actionneur électrique (13) agit avec une broche (16) sur le levier rotatif de frein (8),
dans lequel la broche (16) agit sur le levier rotatif de frein (8) par l'intermédiaire d'une interface (12), dans lequel l'interface (12) est disposée entre la broche (16) de l'actionneur électrique (13) et le levier rotatif de frein (8) et présente un poussoir (18, 29, 29') qui est connecté directement à la broche (16) de l'actionneur électrique (13) et connecté au levier rotatif de frein (8),
dans lequel le poussoir (18) présente une section de logement (18c) avec un logement (18d), dans lequel une extrémité de broche (16b) de la broche (16) est logée dans le logement (18d),
dans lequel l'extrémité de broche (16b) de la broche (16) est fixée dans le logement (18d) de la section de logement (18c) du poussoir (18) avec un élément de boulon (17), dans lequel une surface de bague (16c) de la broche (16) est en contact avec une surface frontale (18g) de la section de logement (18c) du poussoir (18) et transmet une force de pression sur le poussoir (18),
dans lequel le poussoir (18) est en coopération avec une butée élastique avec au moins un élément élastique (23) par l'intermédiaire d'un élément guide (40),
**caractérisé en ce que**
l'élément guide (40) présente un corps (40a) avec une ouverture traversante centrale (40e) et une section cylindrique creuse avec une paroi périphérique (40b), et dans lequel un rebord (40c) en saillie radialement vers l'extérieur est formé sur la paroi périphérique (40b) sur son bord.

13. Frein à disque (1) selon la revendication 12,
**caractérisé en ce que**
le poussoir (18) s'étend à travers l'ouverture traversante (40e) du corps (40a) de l'élément guide (40), dans lequel un côté du corps (40a) de l'élément guide (40) est en contact avec l'épaulement (18e) du poussoir (18).

14. Frein à disque (1) selon la revendication 12,
**caractérisé en ce que**
un élément intermédiaire (42) est disposé entre l'élément guide (40) et le poussoir (18), dans lequel l'élément intermédiaire (42) présente une section cylindrique creuse avec une paroi périphérique (42a) avec un rebord (42b) s'étendant radialement vers l'extérieur et avec un fond (42c) avec une ouverture centrale.

15. Frein à disque (1) selon la revendication 14,
**caractérisé en ce que**
l'élément intermédiaire (42) est disposé avec son fond (42c) sur un diamètre extérieur de la surface de bague (16c) de la broche (16), dans lequel une surface extérieure de la paroi périphérique (42a) est en contact avec le côté intérieur de l'ouverture traversante (40e) du corps (40a) de l'élément guide (40), et dans lequel le rebord (42b) s'étendant radialement vers l'extérieur de l'élément intermédiaire (42) est disposé entre le corps (40a) de l'élément guide (40) et l'épaulement (18e) du poussoir (18).

16. Frein à disque (1) selon l'une quelconque des revendications 12 à 15,
**caractérisé en ce que**
l'élément guide (40) est guidé avec un contact entre le rebord (40c) de la paroi périphérique (40b) de l'élément guide (40) avec une surface intérieure (15d) de la paroi (15a) du boîtier d'actionneur (15) et avec un contact entre un rebord (15e) de la paroi (15a) du boîtier d'actionneur (15) et la surface extérieure (40d) de la paroi périphérique (40b) de l'élément guide (40) de manière déplaçable dans la direction d'un axe de broche (16a) de la broche (16) de l'actionneur (13).

17. Frein à disque (1) selon la revendication 16,
**caractérisé en ce que**
une course de déplacement de l'élément de guidage (40) guidé de manière déplaçable dans la paroi périphérique (15a) du boîtier d'actionneur (15) est établie d'une part par le rebord (40c) de la paroi périphérique (40b) de l'élément guide (40) en association avec une bague d'arrêt (40g) et d'autre part par le rebord (15e) de la paroi (15a) du boîtier d'actionneur (15).

18. Frein à disque (1) selon la revendication 17,
**caractérisé en ce que**
l'au moins un élément élastique (23) s'appuie axialement d'une part sur la surface frontale (40f) du corps (40a) de l'élément guide (40) et d'autre part sur une bague d'appui (24) sur le boîtier d'actionneur stationnaire (15) sur le boîtier d'actionneur stationnaire (15), et dans lequel l'au moins un élément élastique (23) s'appuie radialement sur le boîtier d'actionneur stationnaire (15) et est guidé par celui-ci.

19. Frein à disque (1) selon la revendication 18,
**caractérisé en ce que**
l'élément guide (40) s'appuie avec la bague d'arrêt (40g) contre le rebord (15e) de la paroi périphérique (15a) du boîtier d'actionneur stationnaire (15) par la force élastique de l'au moins un élément élastique (23) précontraint.

20. Frein à disque (1) selon l'une quelconque des revendications précédentes, **caractérisé en ce que**
la broche (16) de l'actionneur électrique (13) est conçue comme une broche filetée à billes.

21. Frein à disque (1) avec un actionneur électrique (13), en particulier pour un véhicule automobile, avec un étrier de frein (4) chevauchant un disque de frein (2), étrier dans lequel un dispositif de serrage (ZV) est disposé avec un levier rotatif de frein (8) avec un axe de levier (8d), dans lequel l'actionneur électrique (13) agit avec une broche (16) directement ou par l'intermédiaire d'une transmission sur le levier rotatif de frein (8),
**caractérisé en ce que**
l'actionneur électrique (13) est monté de manière pivotante, par l'intermédiaire d'un pivot (31), sur un support (30) qui est fixé à l'étrier de frein (4) ou qui fait partie de l'étrier de frein (4).

22. Frein à disque (1) selon la revendication 21,
**caractérisé en ce que**
un élément d'étanchéité flexible (32) est placé entre l'actionneur électrique (13) et l'étrier de frein (4).
